# EUROPEAN PATENT SPECIFICATION

(11) **EP 1 566 093 B1**
(45) Date of publication and mention of the grant of the patent: **08.06.2011**
(21) Application number: 05101226.8
(22) Date of filing: 18.02.2005
(51) Int. Cl.: A01G 1/06

(54) **Grafting machine for vine cuttings or other vegetable varieties and a grafting method**
Veredelungsvorrichtung für Rebstockstecklinge oder andere Gemüsesorten sowie ein Veredelungsverfahren
Appareil à greffage pour les boutures de vignes ou autres variétés de légumes et une méthode de greffage

(30) Priority: 20.02.2004 IT UD20040029
(43) Date of publication of application: 24.08.2005
(73) Proprietor: D'ANDREA GIANCARLO (DITTA INDIVIDUALE), 33095 SAN GIORGIO DELLA RICHINVELDA (PN) (IT)
(72) Inventor: D'Andrea, Giancarlo, 33095, SAN GIORGIO DELLA RICHINVELDA (PN (IT); Bisutti, Alessandro, 33098, VALVASONE (PN) (IT); Ronzani, Giuseppe, 33095, SAN GIORGIO DELLA RICHINVELDA (PN (IT)
(74) Representative: Petraz, Davide Luigi

(56) References cited:
- EP-A- 0 927 513
- FR-A- 2 529 432
- FR-A- 2 541 562
- US-A- 4 601 129
- US-B1- 6 574 916

## Description

### FIELD OF THE INVENTION

The present invention concerns a machine for the automated performing of grafting, and the relative grafting method, in order to obtain vine cuttings or other similar vegetable varieties.

The invention is preferentially, although not exclusively, used to obtain vine cuttings of the vine and for this reason, in the following description, we shall refer to this specific application. EP-A-0 927 513 discloses the features of the preamble of claim 1 and 26.

### BACKGROUND OF THE INVENTION

A method is known for performing grafting in order to obtain vine cuttings of the vine, which is embodied by coupling a wood of the desired species of vine or grape type, provided at one end with at least a bud and known as "graft", with a wood of a vine denominated "graft-holder" or more simply "vine".

At present the graftings are done mainly in a manual manner, possibly with the aid of grafting machines equipped with cutting tools by means of which one end of the graft and one end of the vine, or graft-holder, are cut, advantageously with a Ω-shaped cut, and coupled together.

So that the grafting is performed correctly, the graft must have a section mating in size with, that is to say, substantially equal to or at most slightly less than, that of the graft-holder, and must be positioned with the end without the bud facing towards the graft-holder.

Moreover, the graft and the graft-holder, having a generally oval section, must be positioned in a mating manner, for example with the greater axis of their section arranged substantially parallel to the axis of movement of the cutting tool.

Conventional grafting machines are therefore fed manually by an expert operator able to choose the most suitable graft according to the vine, or vice versa, and to position the two woods to be coupled correctly and precisely on the cutting tools.

Current systems of performing grafting therefore entail long performance times and the need to employ expert and qualified personnel. This leads to high production costs for products that are not always of the highest quality.

One purpose of the invention is to achieve a machine and a method which will allow to perform the operations of preparing and performing grafting in a completely automated manner, in order to obtain vine cuttings or other similar vegetable varieties.

Another purpose of the invention is to achieve a machine to perform grafting that is practical, reliable and that guarantees continuous functioning and high productivity.

The present Applicant has devised and embodied this invention to overcome the shortcomings of the state of the art, in order to achieve these purposes and to obtain other advantages.

### SUMMARY OF THE INVENTION

The present invention is set forth and characterized essentially in the main claims, while the dependent claims describe other innovative characteristics of the invention.

The machine according to the invention comprises an automatic group to feed and separate the grafts, an automatic group to feed and separate the vines, and an automatic grafting group, all managed and coordinated by a command and control unit.

The group to feed and separate the grafts comprises as its main elements:
- separating and transport means able to separate the grafts from each other and arrange them one after the other;
- measurement and selection means able to detect at least the orientation of the bud and a section size of each individual graft, in order to allow the classification thereof into a relative class;
- means to store and divide the grafts according to this classification; and
- handling means able to pick up each graft individually, as selected according to class by said storage means, and to take it to the exact grafting position in cooperation with the grafting group.

The group to feed and separate the vines comprises:
- separating and transport means able substantially to separate the vines, supplied either in bundles and/or loose, from each other and arrange them one after the other;
- orientation and alignment means able to arrange each individual vine with an axis of its oval section on a pre-ordained plane;
- measuring means able to detect at least a section size of said vine, to be correlated to the corresponding section size of the grafts, in order to determine the class of the specific graft to be grafted onto said vine and, advantageously, to identify the position of the first node on the vine itself; and
- handling means able to pick up the vine individually from the orientation and alignment means, and to take it to the exact grafting position in cooperation with the grafting group.

The grafting group comprises two grafting units able to be positioned alternately in a first work position, in order to perform a first step of the grafting operation comprising at least the cutting of the graft, and a second work position in order to complete the grafting operation by cutting the vine and coupling the latter to the graft.

In this way, while one grafting unit is performing the first step in cooperation with the group to automatically feed and position the grafts, the other grafting unit is performing the second step in cooperation with the group to automatically feed and position the vines.

Once the grafting has been performed, the two grafting units exchange their work positions, so that each of them performs the step complementary to that previously performed.

In a preferential embodiment of the invention, the two grafting units are mounted on rotary means able to perform a rotation of ± 180° in order to take them alternately between the two work positions.

According to a variant, after the grafting has been performed, the means to handle the vines are able to take the vine cuttings first in correspondence with a paraffin station and then to a discharge position to discharge them from the grafting machine.

### BRIEF DESCRIPTION OF THE DRAWINGS

These and other characteristics of the present invention will become apparent from the following description of two preferential forms of embodiment, given as a non-restrictive example with reference to the attached drawings wherein:
- fig. 1 is a three-dimensional view of the grafting machine according to the present invention in a first form of embodiment;
- fig. 2 is another three-dimensional view of the grafting machine in fig. 1;
- fig. 3 is a view from above of the grafting machine in fig. 1;
- fig. 4 is a view from "A" of fig. 3;
- fig. 5 is a view from "B" of fig. 3;
- fig. 6 shows a graft and a vine, or graft-holder, that can be grafted using the machine according to the invention;
- fig. 7 is a partial view of a vine cutting obtained with the grafting machine according to the present invention;
- fig. 8 shows the section of the graft and the vine in fig. 6;
- fig. 9 is a partial view from above of the group to feed and separate the grafts of the grafting machine in fig. 1;
- fig. 10 is a partial view of a longitudinal section of the group to feed and separate the grafts in fig. 9;
- fig. 11 shows a device of the group to feed and separate the grafts of the grafting machine in fig. 1;
- fig. 12 is a front view of a device of the group to feed and separate the vines of the grafting machine in fig. 1;
- fig. 13 is a side view of the device in fig. 12;
- figs. 14a+14e and 15a+15e show, respectively in a front and side view, some operating steps of the device in fig. 12;
- fig. 16 is a front view of another device of the group to feed and separate the vines of the grafting machine in fig. 1;
- fig. 17 is a side view of the device in fig. 16;
- figs. 18a and 18b show a detail of the device in fig. 16 in two different operating steps;
- fig. 19 is a partial front view of another device of the group to feed and separate the vines of the grafting machine in fig. 1;
- fig. 20 is a view from above of the device in fig. 19;
- fig. 21 is a three-dimensional view of the grafting group of the grafting machine in fig. 1;
- figs. 22a÷22d show the first step in the grafting operation performed by the grafting group in fig. 21;
- figs. 23a÷23f show the second step in the grafting operation performed by the grafting group in fig. 21;
- fig. 24 is a three-dimensional view of the grafting machine according to the present invention in a second form of embodiment;
- fig. 25 is a view from above of the grafting machine in fig. 24;
- fig. 26 is a partial and three-dimensional view of the group to feed and separate the grafts of the grafting machine in fig. 24;
- fig. 27 is a partial and three-dimensional view of the group to feed and separate the vines of the grafting machine in fig. 24;
- fig. 28 shows a detail of the group to feed and separate the vines of the grafting machine in fig. 24;
- fig. 29 is a three-dimensional view of a detail of the grafting machine in fig. 24;
- fig. 30 is a three-dimensional view of another detail of the grafting machine in fig. 24;
- fig. 31 is a view from above of another detail of the grafting machine in fig. 24.

### DETAILED DESCRIPTION OF A PREFERENTIAL FORM OF EMBODIMENT

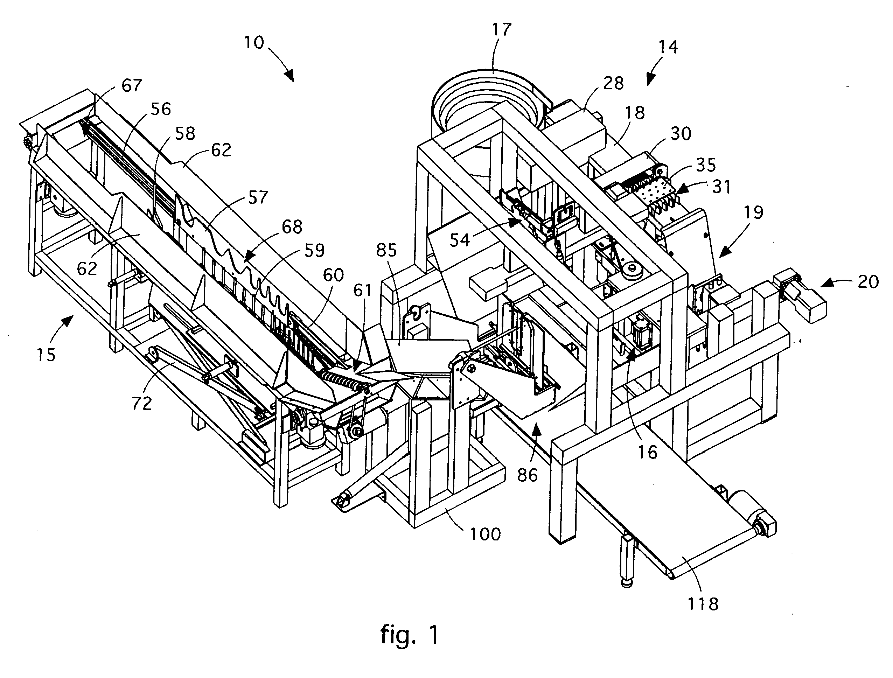

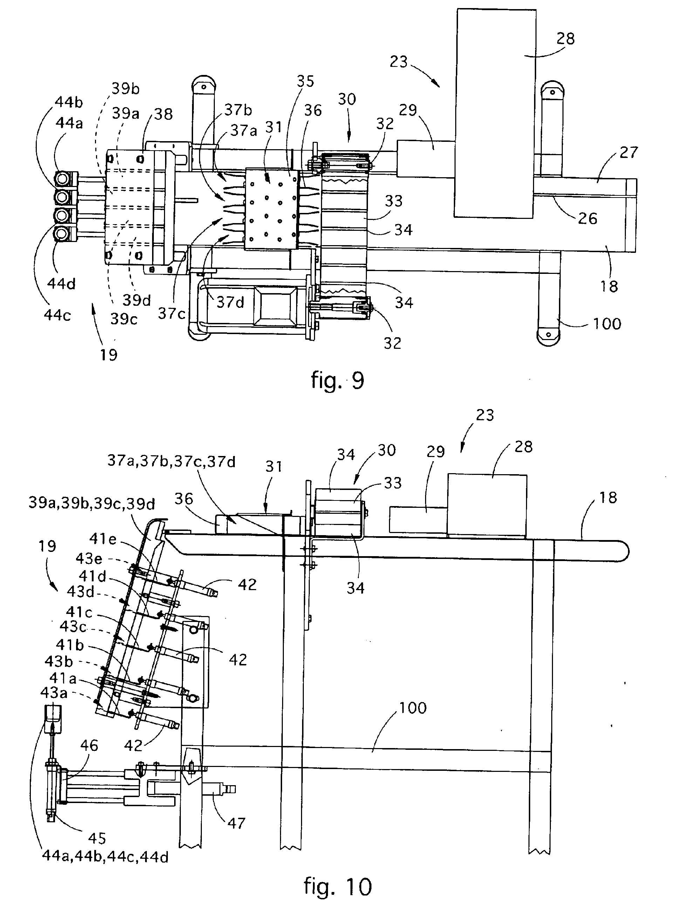

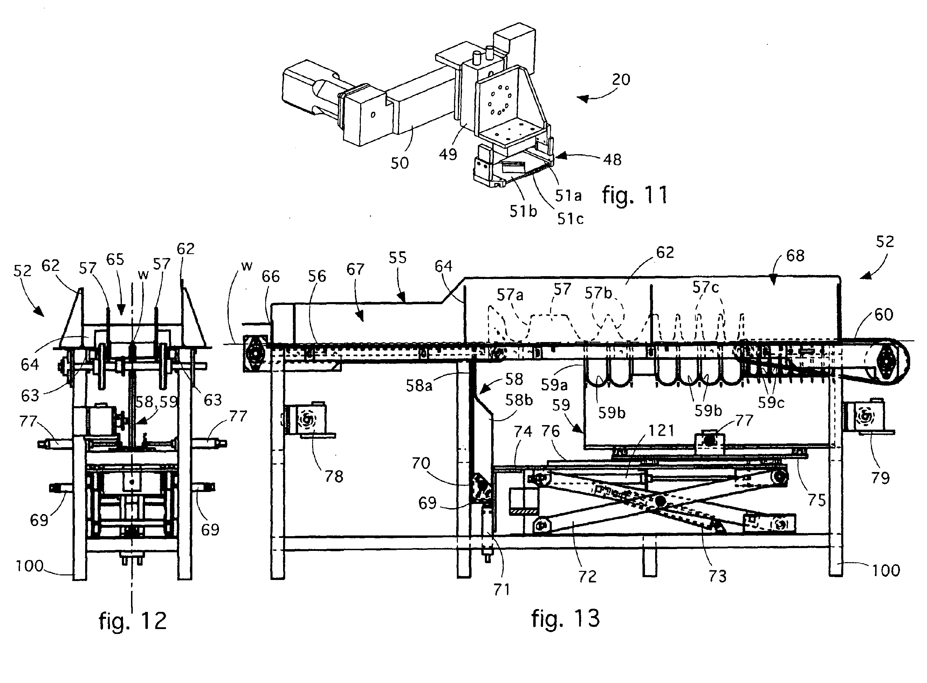

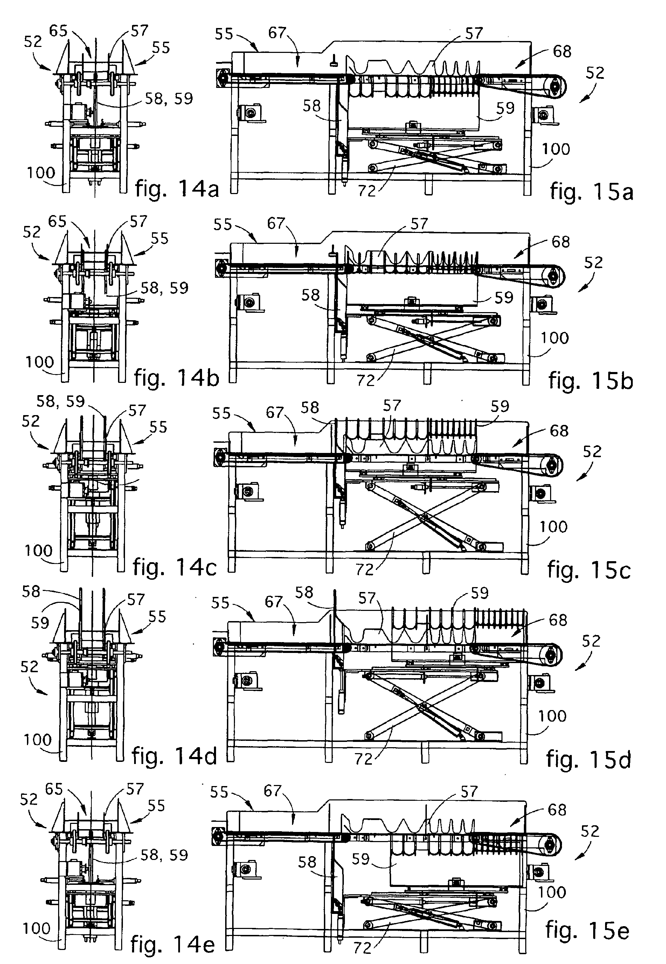

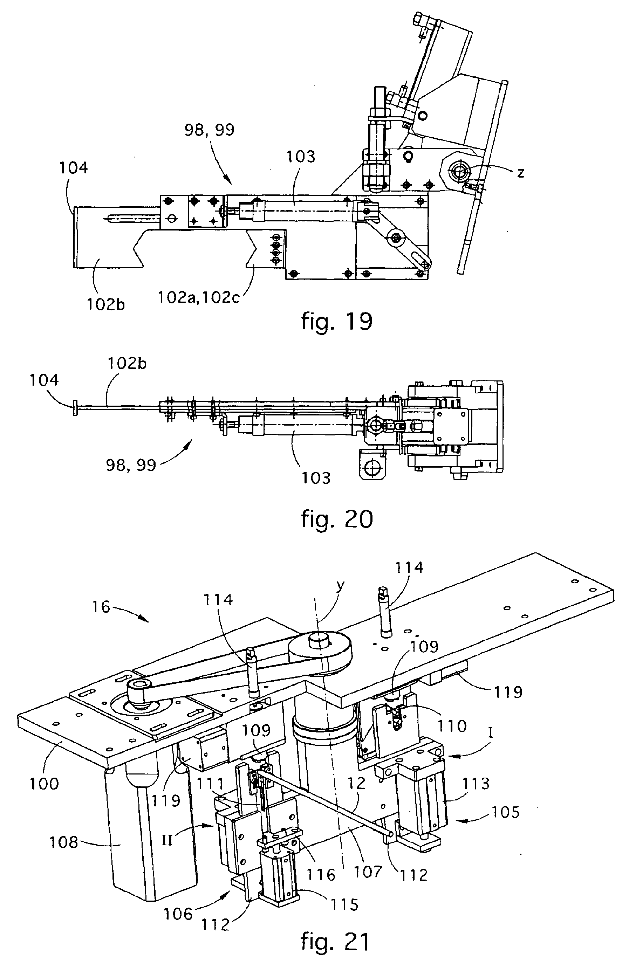

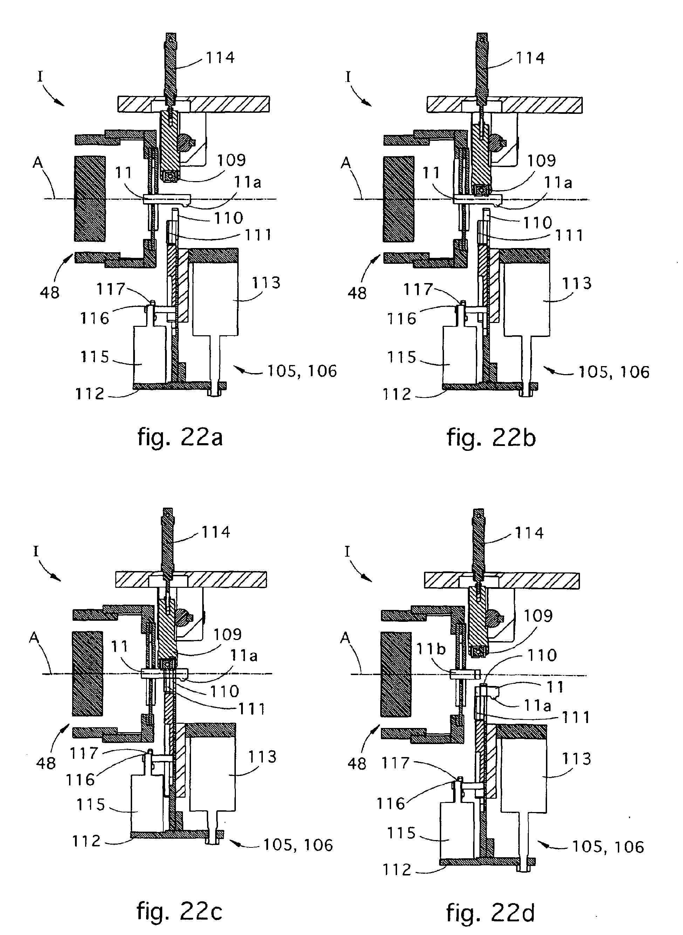

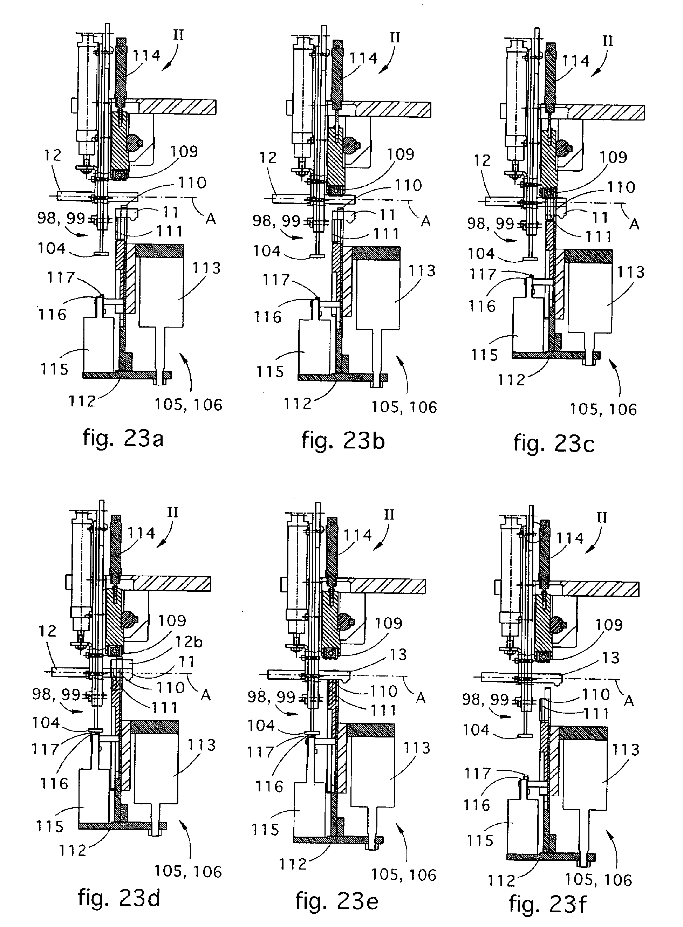

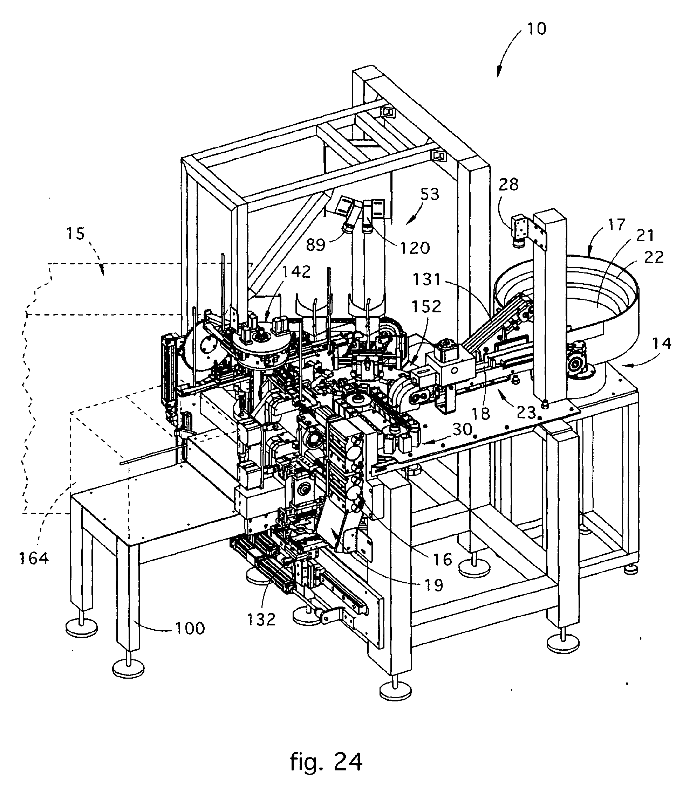

With reference to the attached drawings, number 10 denotes generally the grafting machine according to the invention, shown respectively in a first embodiment in figs. 1-23f, and in a second embodiment in figs. 24-31.

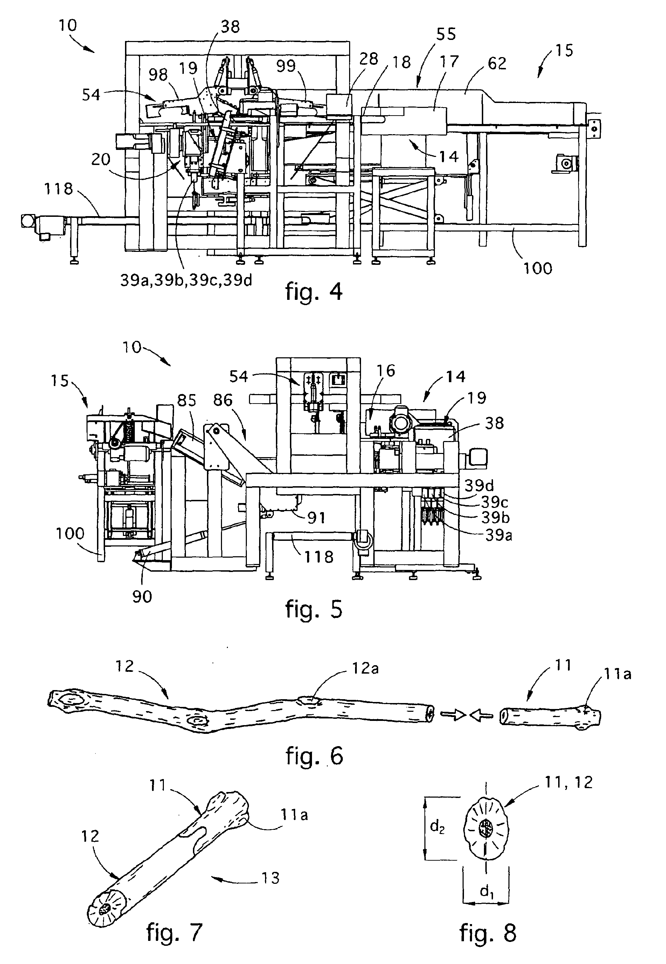

The grafting machine 10 is used to automatically perform grafting of grafts 11 and vines, or graft-holders, 12 in order to obtain vine cuttings 13 (fig. 7). The grafts 11 and the vines 12 have a substantially oval section defined by a lesser axis "d₁" and a greater axis "d₂" (fig. 8).

The grafts 11, normally between 40 mm and 60 mm in length, have at least a bud 11a at one end. The vines 12, normally between 320 mm and 380 mm in length, have a segmented form, with angles of between 160° and 180°, and on their length they may have one or more nodes 12a (fig. 6).

The machine 10 substantially comprises a frame 100 with which a first group is associated, or group to feed and separate the grafts 14, a second group, or group to feed and separate the vines 15, and a third group, or grafting group 16.

The first group 14 and the second group 15 are able to provide, positioning them and orienting them correctly, respectively the grafts 11 and the vines 12 to the third group 16, so that the latter can cut them and couple them, in order to achieve the desired grafting, in this case Ω-type, which allows to obtain vine cuttings 13.

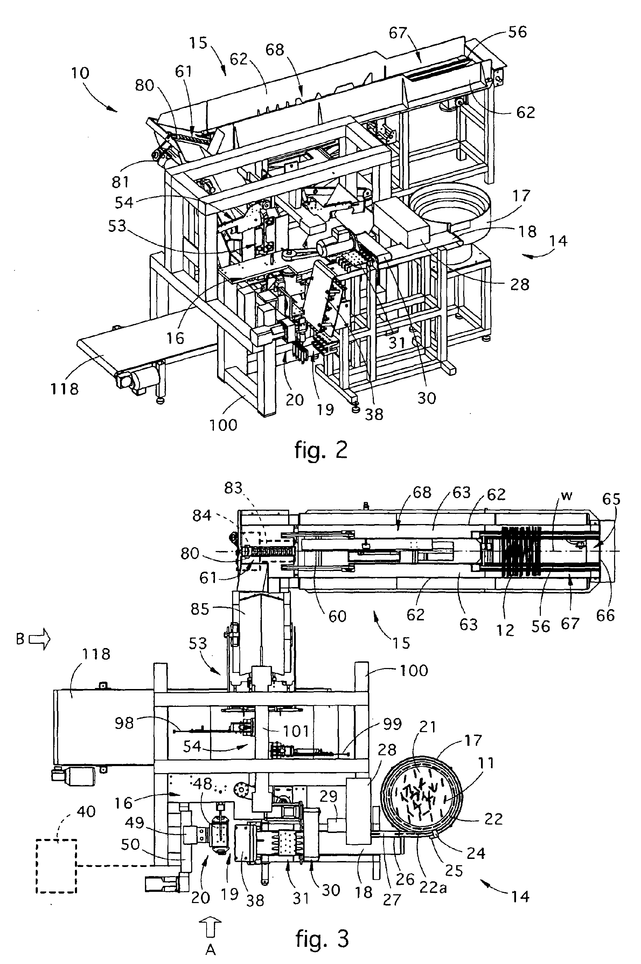

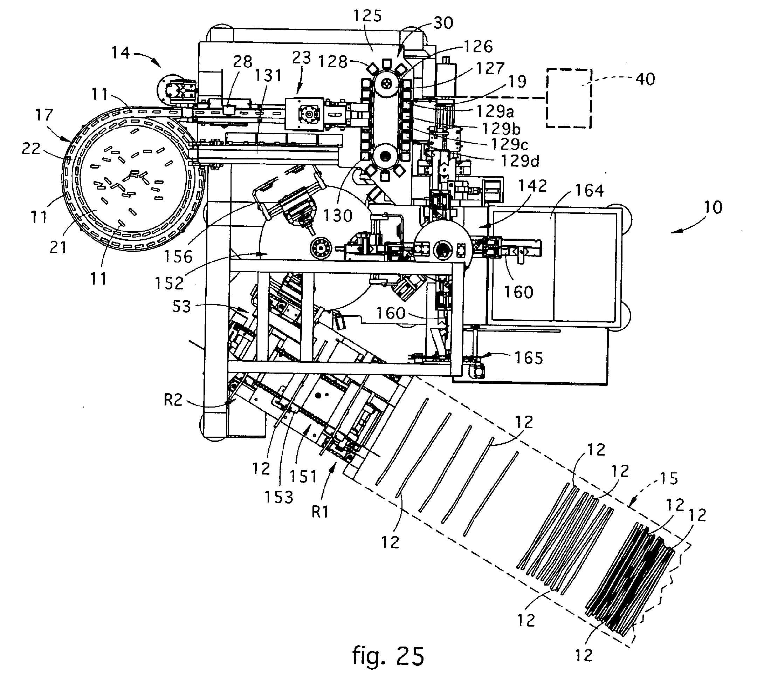

The functioning of the three groups 14, 15 and 16 is managed and coordinated by a command and control unit 40, for example of the PLC type, indicated schematically by a line of dashes in figs. 3 and 25.

In the first embodiment, shown in figs. 1-23f, the first group 14 comprises in sequence a vibrating transporter 17, a conveyor belt 18, a measurement and selection section 23, a store 19 and a first manipulator 20.

The vibrating transporter 17 defines in a single piece a central container 21, in which the loose grafts 11 are able to be delivered, and a spiral channel 22 which puts said central container 21 in communication with the conveyor belt 18. Due to the effect of the vibration of the vibrating transporter 17, the grafts 11 move from the central container 21 towards the spiral channel 22, and are arranged one behind the other along the latter.

A containing wall 26 is associated with the terminal segment 22a of the spiral channel 22, and extends above the conveyor belt 18, defining along the latter a gap 27 of obligatory transit. The conveyor belt 18 advances from the vibrating transporter 17 towards the store 19 and cooperates with the measurement and selection section 23.

The measurement and selection section 23 comprises in order: a sensor 24 and a first blower device 25 located in correspondence with the terminal segment 22a of the spiral channel 22, an optical detector 28, located at exit from the gap 27, a second blower device 29, a conveyor device 30 and a channeling unit 31.

The sensor 24 is able to verify whether the bud 11a of the graft 11 in transit is facing forwards or backwards with respect to the direction of feed of the graft 11, and to transmit the information to the command and control unit 40. If the graft 11 has its bud 11a facing backwards, the command and control unit 40 causes the first blower device 25 to be driven, which emits a jet of air that makes the graft 11 fall back inside the central container 21.

The optical detector 28 is able to measure the length and at least one section size, the lesser axis "d₁" or the greater axis "d₂" of the grafts 11 emerging from the gap 27, and also the presence of the bud 11a, transmitting the information to the command and control unit 40.

Based on this information, for example the section size measured, the command and control unit 40 causes each graft 11 to be matched with a specific class, according to a pre-defined caliber classification according to which, as will be described hereafter, the store 19 is structured.

The second blower device 29, driven by the command and control unit 40 according to the measurements made by the optical detector 28, emits a jet of air that causes the grafts 11 of a size not suitable for grafting to be discharged from the conveyor belt 18.

The conveyor device 30 is located above the conveyor belt 18; it comprises a toothed belt 33, mounted on two rotary shafts 32 with a horizontal axis and arranged substantially orthogonal to the conveyor belt 18, with which a plurality of fins 34 are associated, parallel to the axis of rotation of the shafts 32.

The fins 34 are arranged at a pre-defined interaxis with respect to each other and, when they find themselves facing downwards, are arranged close to the conveyor belt 18, without touching it however.

The toothed belt 33, drawn by the shafts 32, is able to advance by a variable travel equal to a multiple of the interaxis between the fins 34.

The channeling unit 31 comprises, in this case, a substantially horizontal upper plate 35, below which four pairs of vertical platelets 36 are associated, defining four lanes, respectively 37a, 37b, 37c, 37d, with an interaxis substantially equivalent to that between the fins 34.

The store 19 comprises a container 38 divided, in this case, into four channels or sectors 39a, 39b, 39c, 39d arranged aligned with the lanes 37a, 37b, 37c, 37d, and slightly inclined with respect to the vertical.

Each channel 39a, 39b, 39c, 39d is able to house a plurality of grafts 11 belonging to the same class, that is, having section sizes that come within the same range of size according to the pre-defined caliber classification.

To give an example, if the grafts have their greater axis "d₂" comprised between 6 mm and 12 mm, they can be divided into four classes differentiated by the size of said greater axis "d₂": 6-7.5 mm; 7.5-9 mm; 9-10.5 mm; 10.5-12 mm.

In this case, each channel 39a, 39b, 39c, 39d is associated with five relative movable plates respectively, from the bottom upwards, 41a, 41b, 41c, 41d, 41e.

Each movable plate 41a, 41b, 41c, 41d, 41e is associated with a relative actuator 42, for example a small pneumatic piston, able to make them selectively assume a retracted position, wherein it is arranged completely outside the relative channel 39a, 39b, 39c, 39d, or in an advanced position wherein it is arranged inside the relative channel 39a, 39b, 39c, 39d in order to define a housing seating 43a, 43b, 43c, 43d, 43e for a single graft 11. Each channel 39a, 39b, 39c, 39d can therefore house a maximum of five grafts 11 belonging to the same caliber class.

At inlet and outlet of each channel 39a, 39b, 39c, 39d there are relative sensors which, as will be explained hereafter, coordinate the movement of the plates 41a, 41b, 41c, 41d, 41e by means of the relative actuators 42.

Moreover, below each channel 39a, 39b, 39c, 39d there is a small glass, respectively 44a, 44b, 44c, 44d, with a depth of less than the minimum admitted length of the grafts 11, mounted on a relative vertical cylinder 45, for example of the pneumatic type, in turn associated with a support 46 able to be moved by a horizontal cylinder 47.

Each horizontal cylinder 47 is therefore able to make the relative glass 44a, 44b, 44c, 44d selectively assume a retracted position, wherein it is below the relative channel 39a, 39b, 39c, 39d, and an advanced position wherein it is displaced with respect to the latter; moreover, in this advanced position, the vertical cylinder 45 is able to make the glass 44a, 44b, 44c, 44d selectively assume a lowered position or a raised position.

The first manipulator 20 comprises a gripper 48 associated with a support 49 mounted sliding on a guide 50 arranged transverse with respect to the direction of feed of the conveyor belt 18. The gripper 48 can rotate with respect to the support 49 around a horizontal axis, so as to be able to be selectively arranged in a first position, facing towards the glasses 44a, 44b, 44c, 44d, in order to pick up the grafts 11 from the latter, and a second position, rotated by 90° with respect to the first, wherein it faces towards the third group 16 to arrange the grafts 11 substantially horizontally, in the correct position for the grafting to be performed.

The support 49, sliding along the guide 50, allows the gripper 48 to translate from a position for picking up the grafts 11, wherein it is arranged above a specific glass 44a, 44b, 44c, 44d, to a position for releasing the grafts 11 to the third group 16, wherein it is arranged close to the latter.

In the preferential embodiment shown, the gripper 48 comprises three V-shaped jaws, first 51a, second 51b and third 51c, of which the second 51b is arranged in an intermediate position and opposite the first 51a and third 51c.
The gripper 48 is able to selectively assume a closed condition for clamping the graft 11 and an open condition for releasing the graft 11.

The arrangement and shaping of the jaws 51a, 51b and 51c allow to clamp the graft 11 in a position substantially parallel to the ideal axis around which the gripper 48 closes.

The second group 15 comprises in order a separator device 52, a measuring and positioning unit 53 and a second manipulator 54.

The separator device 52 essentially comprises a containing structure 55, a first pair of transport belts 56, two fixed combs 57, two loading spurs 58, two movable combs 59, a second pair of transport belts 60 and a transfer unit 61.

The containing structure 55, solid with the frame 100, comprises two parallel longitudinal walls 62, associated at the lower part with respective supporting planes 63 facing towards the inside and, at an intermediate point thereof, with relative transverse walls 64 which extend as far as said supporting planes 63.

The two longitudinal walls 62 are connected to each other at one end by a front edge 66; between the latter and the two transverse walls 64 an accumulation compartment 67 is defined wherein the vines 12 are able to be arranged, in bundles. The remaining part of the containing structure 55 defines a division zone 68 of the bundle of vines 12.

Between the two supporting planes 63, and therefore between the two transverse walls 64, there is a central gap 65 which extends for the entire length of the containing structure 55.

The first pair of transport belts 56, able to be driven by a relative motor 78, is arranged between the central gap 65 and the supporting planes 63. It is able to transport the vines 12, introduced into the accumulation compartment 67, transversely along a substantially horizontal median axis of movement "w", as far as close to the transverse walls 64.

The two fixed combs 57 are arranged in the division zone 68, symmetrical with respect to the median axis of movement "w", and substantially at the edges of the central gap 65. Each of them defines, in this case, an initial hollow 57a, two intermediate hollows 57b, and four terminal hollows 57c. The terminal hollows 57c include between them an interaxis half that of the intermediate hollows 57b.

The loading spurs 58 are arranged between the transverse walls 64 and the initial hollow 57a of the fixed combs 57; they include, in a single piece, a point 58a at the top and at the lower part a plate 58b having the upper segment inclined towards the fixed combs 57.

The loading spurs 58 are associated with respective horizontal cylinders 69 able to make them selectively assume a close-up position, wherein they are in contact with each other close to the median axis of movement "w", and a reciprocally distanced position, wherein they are arranged at the edges of the central gap 65.

The horizontal cylinders 69 are mounted on a support 70 associated at the lower part with two vertical cylinders 71, able to selectively raise the loading spurs 58.

The vertical cylinders 71 are associated with the upper base 74 of a pantograph lifting device 72, constrained to the frame 100 and driven by actuators with independent rods 73, on which the movable combs 59 are also mounted.

To be more exact, the two movable combs 59 are mounted on a slider 75 able to slide longitudinally on guides 76, attached to the upper base 74 of the pantograph lifting device 72, by driving a cylinder 121; the slider 75 is able to move from a retracted position, wherein it is located near the loading spurs 58, to an advanced position wherein it is located partly below the second pair of transport belts 60.

The movable combs 59 have at the upper part a plurality of teeth 59a which define a series of first hollows 59b, having an interaxis substantially equal to that of the terminal hollows 57c, and a series of second hollows 59c, having an interaxis half that of the first hollows 59b.

The reciprocal position of the fixed combs 57 and the movable combs 59 is such that, when the slider 75 is in the retracted position, some of the teeth 59a are in axis with the hollows 57a, 57b, 57c, while, with the slider 75 in the advanced position, two pairs of teeth 59a are in axis with the intermediate hollows 57b, some of the first hollows 59b are in axis with the terminal hollows 57c and the second hollows 59c are all located beyond the fixed combs 57.

The pantograph lifting device 72 is able to take the loading spurs 58 and the movable combs 59 from a lowered position, wherein the points 58a and the teeth 59a are below the supporting planes 63, to a raised position wherein the points 58a and teeth 59a move to above the fixed combs 57.

Each movable comb 59 is also associated with a relative horizontal cylinder 77 able to define a transverse movement thereof on the slider 75, from a close-up position, wherein they are in contact with each other, near the median axis of movement "w", and a reciprocally distanced position, wherein they are arranged at the edges of the central gap 65.

The second pair of transport belts 60, able to be driven by a relative motor 79, is located substantially in alignment with the first pair of transport belts 56, behind the fixed combs 57. They extend from the latter as far as the transfer unit 61, allowing the vines 12 to be transported between them, along the median axis of movement "w".

The transfer unit 61 comprises a feed screw 80, driven by a relative motor 81, defining a helical channel 82 inside which the vines 12 are able to be inserted.

The feed screw 80 is arranged inclined towards the containing structure 55 and above it there is a pressure element 83, able to keep the vines 12 inside the helical channel 82 in the initial segment of the feed screw 80, and an expulsion element 84, arranged in correspondence with the terminal segment of the feed screw 80, able to thrust the vines 12 outside the helical channel 82, towards the measuring and positioning unit 53.

The pressure element 83 and the expulsion element 84 are shown schematically, and by a line of dashes, only in fig. 3.

In a preferential form of embodiment, the pressure element 83 consists of a guide profile mounted on elastic supports able to keep it in a position close to the feed screw 80 and pressing on the vines 12 passing in the helical channel 82; the expulsion element 84, on the contrary, consists of a motorized brush, with an axis of rotation parallel to the axis of rotation of the feed screw 80.

According to a variant, the pressure element 83 consists of a fixed brush whose bristles rest on the upper segment of the feed screw 80.

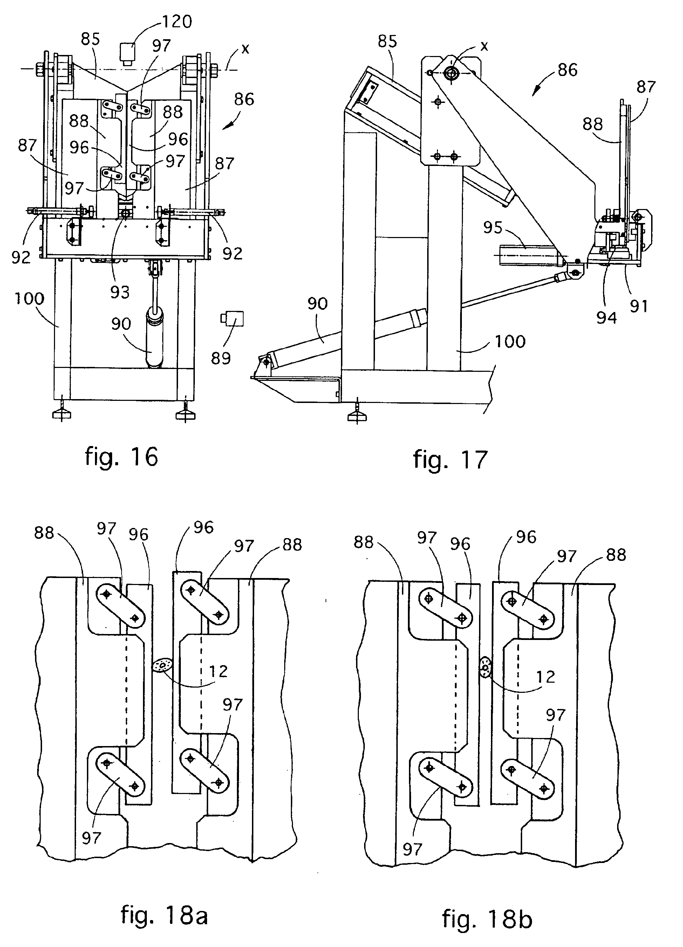

The measuring and positioning unit 53 comprises a slide 85, an orientation device 86 and two optical detectors 89 and 120, the latter shown only schematically in fig. 16.

The slide 85, solid with the frame 100, has a V-shaped section and is arranged substantially orthogonal to the feed screw 80, so as to be able to receive the vines 12 from the latter.

Downstream of the slide 85 there is the orientation device 86, consisting of a pivoting support 91 on which are mounted a pair of front baffles 87 and a pair of rear baffles 88, parallel to each other and substantially orthogonal to the slide 85. The pivoting support 91 is pivoted on the frame 100, so that it can rotate with respect to a substantially horizontal axis "x", driven by a piston 90.

To be more exact, the piston 90, which is pivoted at one end to the pivoting support 91 and at the other end to the frame 100, is able to move the orientation device 86 from a lowered position, in which the baffles 87 and 88 are substantially aligned with the slide 85, to a raised position, in which the baffles 87 and 88 are facing towards the third group 16 in order to arrange the vines 12, as will be described hereafter, substantially horizontal, in the correct position for the grafting to be performed.

The front baffles 87 are able to selectively assume a closed position, wherein they are arranged one in contact with the other, in order to hold the vines 12 on the slide 85, and an open position, in which they are reciprocally distanced, driven by respective cylinders 92.

The rear baffles 88 are able to assume the same positions as the front baffles 87, independently from the latter, driven by a relative actuator 93 associated with a rack mechanism, which allows to make them converge exactly in axis with the slide 85.

The rear baffles 88, together with the relative actuator 93, are also mounted on a connection profile 94 associated with a motor 95 that allows it to be selectively moved forwards and backwards, that is, towards and away from the front baffles 87.

Each rear baffle 88 is associated, on the inner side, that is, the side facing towards the other rear baffle 88, with an oscillating insert 96 connected thereto by means of a pair of parallel levers 97. The levers 97 are associated with respective springs that exert a thrust, maintaining the oscillating inserts 96 in their position of greatest detachment from the inner side of the relative rear baffles 88.

The two oscillating inserts 96 are advantageously made of anti-friction material, for example polyzene or suchlike, and are able, as will be explained hereafter, to close on the vines 12 arranged on the slide 85 in order to orient them in a desired manner and allow them to move on the vertical plane.

The optical detector 89 is able to identify the position of the first node 12a, that is, the one facing forwards, of each vine 12 arranged on the slide 85, and to measure the distance of said first node 12a from the front end of the vine 12.

The optical detector 120, in this case, is arranged above the orientation device 86 and allows to measure the distance between the rear baffles 88 when the latter are clamped on the vine 12, thus determining the value of the lesser axis "d₁" of the vine 12 that is on the slide 85.

The second manipulator 54 comprises two grippers of the traversing type, respectively first 98 and second 99, mounted symmetrically sliding along a guide beam 101, substantially horizontal, aligned with the slide 85.

To be more exact, each of the two grippers 98 and 99 is able to rotate independently by 90° with respect to a relative horizontal axis "z" in order to move from a condition wherein it is aligned with the slide 85 to a displaced condition with respect to the latter.

The grippers 98 and 99 are also able to slide, in a reciprocally coordinated manner and in an inverse direction with respect to each other, along the guide beam 101 in order to alternately move from a position close to the slide 85, to pick up the vine 12, to a position close to the third group 16 in order to position the vine 12 for the grafting to be performed.

Each gripper 98, 99 comprises three V-shaped jaws, a first 102a, a second 102b and a third 102c, of which the second 102b is arranged in an intermediate position and opposite with respect to the first 102a and the third 102c. Each gripper 98, 99 is able, driven by a piston 103, to selectively assume a closed position wherein it clamps the vine 12 and an open condition wherein it releases the vine 12.

The jaws 102b, that is, the jaws farthest from the axis of rotation "z", have at the outer end an abutment edge 104, the function of which will be explained hereafter.

The third group 16 essentially comprises two grafting units, a first 105 and a second 106, mounted opposite, on a rotating table 107, with respect to the vertical axis of rotation "y" of the rotating table 107 itself, two matrixes 109, able to cooperate with said grafting units 105, 106, and a sliding belt 118 to discharge the vine cuttings 13.

The two matrixes 109 are arranged respectively one in correspondence with a first work position "I", and the other in correspondence with a second work position "II" in which said grafting units 105, 106 are able to be alternately arranged by the rotating table 107.

To be more exact, the rotating table 107 is driven by a motor 108 which allows it to rotate by ±180°, around the axis "y" with respect to the frame 100, so as to be able to alternately arrange a grafting unit 105 or 106 in said first work position "I", in cooperation with the first group 14 and with a matrix 109, and the other grafting unit 106 or 105 in a second work position "II", in cooperation with the second group 15 and with the other matrix 109, and vice versa.

Each grafting unit 105, 106 comprises a Ω-shaped knife 110 and a thruster 111, both movable vertically and able to be positioned below one or the other of the two matrixes 109.

To be more exact, the knife 110 is mounted on a support 112 able to slide vertically with respect to the rotating table 107, driven by a cylinder 113, in order to take the knife 110 from a lowered position located below the horizontal plane "A", on which the grafting is performed, to a raised position located above the plane "A".

The thruster 111 is arranged adjacent to the knife 110 and is associated with a relative cylinder 115, mounted on the support 112 of the knife 110, which is able to determine a vertical movement thereof from a lowered position, wherein it is below the knife 110, to a raised position wherein it moves to above the plane "A".

The thruster 111 also comprises an end-of-travel element 116, associated with a sensor 117, able to cooperate in abutment with the abutment edge 104 of the grippers 98 and 99.

Each matrix 109 is in turn associated with a relative cylinder 114 able to move it from a raised position, located above the plane "A", to a lowered position in cooperation with the knife 110 in proximity with the plane "A".

A braking member 119 is associated with the matrix 109 in order to selectively clamp it in its lowered position.

The machine 10, managed completely automatically by the command and control unit 40, functions as follows.

The grafts 11, accumulated loose in the central container 21 of the vibrating transporter 17, progressively go up the spiral channel 22, and are arranged one after the other. The sensor 24 verifies the orientation of the grafts 11 in transit, and transmits the information to the command and control unit 40 for the possible drive of the first blower device 25 which determines the discharge of the grafts 11 that are not correctly oriented, as described before.

Once they have arrived on the conveyor belt 18, the grafts 11 are distanced from each other by about 100 mm due to the difference in speed of transport between the vibrating transporter 17 and the conveyor belt 18.

At outlet from the gap 27, each graft 11 transits in correspondence with the optical detector 28 which verifies the presence thereon of the bud 11a and measures its length and a section size, in this case advantageously the lesser axis "d₁", transmitting the information to the command and control unit 40; the latter provides to classify the graft 11 based on the classes according to which the store 19 is structured, or commands the second blower device 29 to be driven if the graft 11 does not come within any of said classes.

When the graft 11 reaches the conveyor device 30, the command and control unit 40, based on the caliber class to which said graft 11 belongs, determines the selective movement of the toothed belt 33, in order to direct the graft 11 towards the lane 37a, 37b, 37c, 37d aligned with the channel 39a, 39b, 39c, 39d corresponding to its caliber class.

To give an example, if the graft 11 belongs to a first class, to be stored in channel 39a, the toothed belt 33 stays still, so that the graft 11, transported by the conveyor belt 18 in axis with the gap 27, transits along lane 37a and continues, falling into the channel 39a.

On the contrary, if the graft 11 belongs to a second class, to be stored in the channel 39b, the toothed belt 33 advances by a travel equal to an interaxis between the fins 34, so that the fins 34 that are facing downwards push the graft 11, while the latter is made to advance by the conveyor belt 18, into alignment with the lane 37b, and hence with the channel 39b inside which it will fall to be stored.

At the beginning of the work cycle of the machine 10, when the store 19 is completely empty, the movable plates 41b, 41c, 41d and 41e are in a retracted position, while only the plates 41a are arranged in an advanced position, in order to house the first grafts 11 of every class in the housing seating 43a located at the bottom.

As soon as a graft 11 enters a channel 39a, 39b, 39c, 39d, the sensor located at its inlet determines the start of a pre-defined time, at the end of which, with the same graft 11 resting on the plate 41a, the plate 41b moves to an advance position driven by the relative actuator 42.

The movement of the other plates 41c, 41d and 41e occurs in the same way, when other grafts 11 are introduced into the same channel 39a, 39b, 39c, 39d.

If, after it has been measured by the optical detector 28, a graft 11 is assigned to a class whose channel 39a, 39b, 39c, 39d is full, that is, with all the housing seatings 43a, 43b, 43c, 43d, 43e occupied, the graft 11 is discharged from the conveyor belt 18 by means of the toothed belt 33. The same happens for subsequent grafts 11 belonging to the same class, until the housing seating 43e located at the top is free.

The choice of the graft 11 to be picked up from the store 19 is made by the command and control unit 40 according to the vine 12 that is prepared at the same time by the measuring and positioning unit 53 of the second group 15.

To be more exact, as soon as the optical detector 120 measures the distance between the rear baffles 88 and hence the value of the lesser axis d₁ of the vine 12, transmitting this datum to the command and control unit 40, the latter determines the choice of the class of the grafts 11 most appropriate for this vine 12, and commands the retreat of the plate 41a of the channel 39a, 39b, 39c, 39d relative to said class.

The graft 11 contained in the housing seating 43a therefore falls into the glass 44a, 44b, 44c, 44d below, which is then taken to the advanced position by the relative horizontal cylinder 47.

The gripper 48, moving with the relative support 49 along the guide 50, moves to the pick-up position above the glass 44a, 44b, 44c, 44d wherein the graft 11 is contained.

The glass 44a, 44b, 44c, 44d is then taken to a raised position, by means of the vertical cylinder 45, and the graft 11, protruding therefrom, is picked up by the gripper 48 which moves to a closed condition. Then the glass 44a, 44b, 44c, 44d is returned to the lowered position by the vertical cylinder 45.

The gripper 48 then rotates from the first to the second position, arranging the graft 11 substantially horizontal on the plane "A" and in axis with the grafting unit, for example the first 105, which at that moment is aligned with the slide 85.

The support 49 then slides along the guide 50 towards the third group 16, until the gripper 48 arranges the graft 11, with the bud 11a facing towards the second group 15, in correspondence with said grafting unit 105.

At the same time that the first group 14 is managing the grafts 11, the second group 15, in coordinated manner, is managing the vines 12, which are periodically loaded in bundles into the accumulation compartment 67 of the containing structure 55, where they are separated from each other and arranged substantially parallel by means of a cyclical process performed by the loading spurs 58 and the movable combs 59.

In this process, first of all the motor 78 is started in order to feed forwards the first pair of transport belts 56, which takes the vines 12 close to the transverse walls 64; in this step the loading spurs 58 and the movable combs 59 are in a lowered and close-up position, with the slider 75 advanced and the pantograph lifting device 72 lowered.

The pantograph lifting device 72 is then raised for a first part of the travel, so that the points 58a of the loading spurs 58 penetrate into the bundle of vines 12; then the horizontal cylinders 69 are driven, so as to take the loading spurs 58 to a reciprocally distanced position, isolating a first bunch of vines 12 substantially parallel to each other.

Subsequently the pantograph lifting device 72 is raised for the remaining part of the travel, and the vertical cylinders 71 are driven so as to further raise the loading spurs 58, making the first bunch of vines 12 fall inside the initial hollow 57a of the fixed comb 57.

Then the pantograph lifting device 72 is lowered again and the vertical cylinders 71 are made to return in order to take the loading spurs 58 and the movable combs 59 to the lowered position. The loading spurs 58 and the movable combs 59 are also returned to a close-up position and the slider 75 is retracted.

The pantograph lifting device 72 is then again raised for the first part of the travel, in order to make a pair of teeth 59a penetrate into the first bunch of vines 12 arranged in the initial hollow 57a, so as to divide it into two, and the points 58a penetrate into the bundle of vines 12 of the accumulation compartment 67. Subsequently, by activating the horizontal cylinders 69 and 77, the loading spurs 58 and the movable combs 59 are taken to a reciprocally distant position, while the pantograph lifting device 72 is raised for the remaining part of its travel, so as to take the loading spurs 58 and the movable combs 59 above the fixed combs 57.

Then the slider 75 is made to advance and the cylinders 71 are activated to unload a new bunch of vines 12 into the initial hollows 57a; then the pantograph lifting device 72 is lowered again, so that the movable combs 59 deposit the two parts of the first bunch of vines 12 in two corresponding pairs of intermediate hollows 57b.

The cycle to move the loading spurs 58 and the movable combs 59 is then repeated, so that the parts of the first bunch of vines 12 are again divided, until the vines 12, separated and aligned orthogonally to the transport belts 60, are taken onto the second pair of transport belts 60, while at the same time the bunches of vines 12, loaded each time by the loading spurs 58, are progressively divided.

The vines 12 thus aligned are moved by the second pair of transport belts 60, reaching the feed screw 80 and being inserted one by one in the helical channel 82; the pressure element 83, advantageously of the flexible type so as to adapt to the conformation of the vine 12, keeps the latter inside the helical channel 82 until it reaches the expulsion element 84, which provides to discharge it into the slide 85.

The vine 12, sliding along the slide 85, moves to abut on the front baffles 87 which are in a closed position, with the pivoting support 91 in the lowered position.

The optical detector 89 then provides to identify the position of the first node 12a of the vine 12 with respect to its front end; according to this position, the rear baffles 88, in the open position, move along the vine 12 until they reach a position located at a desired distance from the first node 12a, then close on the vine 12.

In this way the vine 12, compressed between the oscillating inserts 96, is arranged on a substantially vertical plane, orthogonal to the baffles 88, and rotates around its own longitudinal axis, automatically orienting itself with the greater axis "d₂" on the vertical plane.

Then the optical detector 120 provides to measure the section size of the vine 12 to be compared to the section size of the grafts 11 measured by the optical detector 28, in this case the lesser axis "d₁", in order to classify the grafts 11.

The measurement is transmitted to the command and control unit 40 so as to determine the class of the graft 11 to be picked up in order to graft the vine 12.

If the optical detector 120 shows an incompatible section size of the vine 12, or the optical detector 89 finds an improper position of its first node 12a, the baffles 87 and 88 are opened, discharging the vine 12 which is then discarded.

If on the contrary the vine 12 comes within the allowed parameters, only the front baffles 87 are opened and the pivoting support 91 is taken to the raised position, so as to arrange the vine 12 with its front segment in a gripping position for horizontal alignment.

One of the two grippers 98, 99 of the second manipulator 54, for example the first gripper 98, slides along the guide beam 101 and moves to a position to pick up the vine 12; the vine 12 is then gripped at a pre-defined distance from the rear baffles 88, so that the first node 12a falls into the discard part 12b of the vine 12 determined by the grafting, as will be explained hereafter.

Then the rear baffles 88 open and the first gripper 98, sliding along the guide beam 101, moves into correspondence with the second work position "II", arranging the vine 12 in the exact position for grafting.

In the meantime, the second gripper 99, in its displaced condition so as not to interfere with the first gripper 98, slides along the guide beam 101 in an inverse direction; then, once it has passed the first gripper 98, it rotates around the axis "z" and returns in alignment with the slide 85 in order to pick up the next vine 12.

The grafting is performed in two steps, respectively in the first work position "I", where the graft 11 is cut, and the second work position "II", where the vine 12 is cut and coupled with the graft 11.

In the first step, the chosen graft 11, held by the gripper 48 with the bud 11a facing forwards, is arranged on the plane "A" and in axis with the grafting unit, for example the first 105, which at that moment is in the first work position "I".

In the first grafting unit 105, the knife 110 and the thruster 111 are in the lowered position, while the matrix 109 located above them is raised, precisely to allow the positioning of the graft 11.

The matrix 109 is then lowered, by driving the cylinder 114, until it abuts on the graft 11, and the braking member is driven to clamp the matrix 109 in that position.

Subsequently, the cylinder 113 is driven which takes the knife 110 to a raised position in order to perform the Ω-shaped cut on the graft 11.

Then the knife 110 again assumes the lowered position, holding the graft 11 provided with the bud 11a, while the discard part 11b of the graft 11 remains held by the gripper 48 which provides to discharge it before picking up a new graft 11 from the store 19.

The rotating table 107 is then made to rotate by 180°, so as to take the first grafting unit 105 to the second work position "II" and the second grafting unit 106 to the first work position "I".

While the second grafting unit 106 is performing the step just described, the first grafting unit 105 provides to complete the grafting.

To be more exact, the gripper that holds the vine 12, for example the first gripper 98, arranges the vine 12 on the plane "A", in axis with the first grafting unit 105, which keeps the knife 110 and the thruster 111 in a lowered position, while the matrix 109 located above them is raised; the knife 110 still holds the graft 11 with the bud 11a opposite the thruster 111.

The first gripper 98 arranges the vine 12 between the knife 110 and the matrix 109, therefore partly above the graft 11, keeping it in that position.

The matrix 109 is then lowered until it abuts on the vine 12, and the braking member 119 is driven to clamp the matrix 109 in that position.

Then the knife 110 is raised by driving the cylinder 113, until it abuts on the matrix 109, so as to perform the Ω-shaped cut on the vine 12, and then is clamped; in this condition the graft 11 is below the discard part 12b of the vine 12.

Subsequently the matrix 109 is released and returned to the raised position, while the thruster 111 is raised, by driving the cylinder 115, so as to take the graft 11 in axis with the vine 12, coupling the respective Ω―shapes and hence achieving the grafting. The discard part 12b of the vine 12, pushed by the graft 11, is then discharged.

With the thruster 111 raised, the end-of-travel element 116 abuts on the abutment edge 104 of the first gripper 98; the sensor 117 transmits the contact signal to the command and control unit 40 which determines the drive of the cylinder 113 in order to lower the knife 110; the pressure exerted by the thruster 111 on the vine cutting 13 thus obtained allows the knife 110 to disengage.

Subsequently, the thruster 111 is also lowered again by driving the cylinder 115, and the vine cutting 13 is unloaded from the first gripper 98, which is arranged in the displaced condition, onto the sliding belt 118 in order to be transported to the storage seating.

Then the rotating table 107 again rotates by 180° in order to perform a new grafting.

In the second embodiment of the grafting machine 10, shown in figs. 24-31, wherein the same numbers denote identical or equivalent components of those in the first embodiment, the first group 14 comprises in sequence a vibrating transporter 17, a conveyor belt 18, a measurement and selection section 23, a store 19 and a first manipulation apparatus 122 (figs. 25. 26 and 29).

The vibrating transporter 17 is substantially equal to that in the first embodiment of the machine 10, while the conveyor belt 18 is narrower, so that the grafts 11 are arranged substantially aligned one after the other along the relative axis.

The measurement and selection section 23 develops along the conveyor belt 18, and partly downstream thereof; to be more exact, it comprises in order: an optical detector 28, an expulsion device 123, a turnover device 124 and a conveyor device 30.

The optical detector 28 is able to measure the length and at least a section measurement, advantageously both section measurements, of the grafts 11, and also the orientation of the relative bud 11a, and to transmit this information to the command and control unit 40, which provides to classify each graft 11 in transit as seen before.

If the graft 11 is of a size that is incompatible with the grafting operation, the expulsion device 123, for example a compressed air blower, provides to discharge it from the conveyor belt 18.

On the contrary if the graft 11 has the bud 11a facing backwards with respect to the direction of advance on the conveyor belt 18, the turnover device 124 provides to rotate it by 180°, so as to orient it in the correct way.

In a possible form of embodiment, the turnover device 124 comprises a grooved guide profile, through which the grafts 11 transit, slightly raised with respect to the conveyor belt 18; the grooved profile is made to rotate by 180° by the command and control unit 40 when it detects that the graft 11 in transit at that moment is not correctly oriented, so as to make the graft 11 perform a mating rotation.

The conveyor device 30 is arranged downstream and below the conveyor belt 18, in direct cooperation with the store 19, which is substantially organized as in the first form of embodiment of the machine 10, but does not have the glasses 44a, 44b, 44c, 44d.

The conveyor device 30 comprises a supporting plane 125 above which a toothed belt 126 is mounted able to be fed forwards step-wise by two pulleys 127 with a vertical axis.

The supporting plane 125 has four through holes 129a, 129b, 129c, 129d at inlet to the four channels or sectors 39a, 39b, 39c, 39d of the store 19; the through holes 39a, 39b, 39c, 39d are normally closed by respective shutters able to be selectively opened in order to permit the transit of the grafts 11 into the appropriate channel 39a, 39b, 39c, 39d according to their class.

On the toothed belt 126 a plurality of tubes 128 are mounted, axially hollow and arranged slightly raised from the supporting plane 125.

The rotation of the toothed belt 126 determines the progressive and continuous step-wise movement of each tube 128, from a reception position at the end of the conveyor belt 18, wherein it accommodates inside itself a graft 11, to a discharge position, in correspondence with the through hole 129a, 129b, 129c, 129d of the channel 39a, 39b, 39c, 39d, wherein said graft 11 has to be stored, and then again to the initial reception position.

In other words, each tube 128, depending on the class of the graft 11 contained therein, discharges the latter into the appropriate channel 39a, 39b, 39c, 39d through the through hole 129a, 129b, 129c, 129d which in the meantime has been made available by the opening of the relative shutter.

If the specific channel 39a, 39b, 39c, 39d is full, the relative shutter does not open and the graft is transported into correspondence with a discharge aperture 130, made on the supporting plane 125, below which there is a conveyor belt 131 which delivers it into the central container 21 of the vibrating transporter 17.

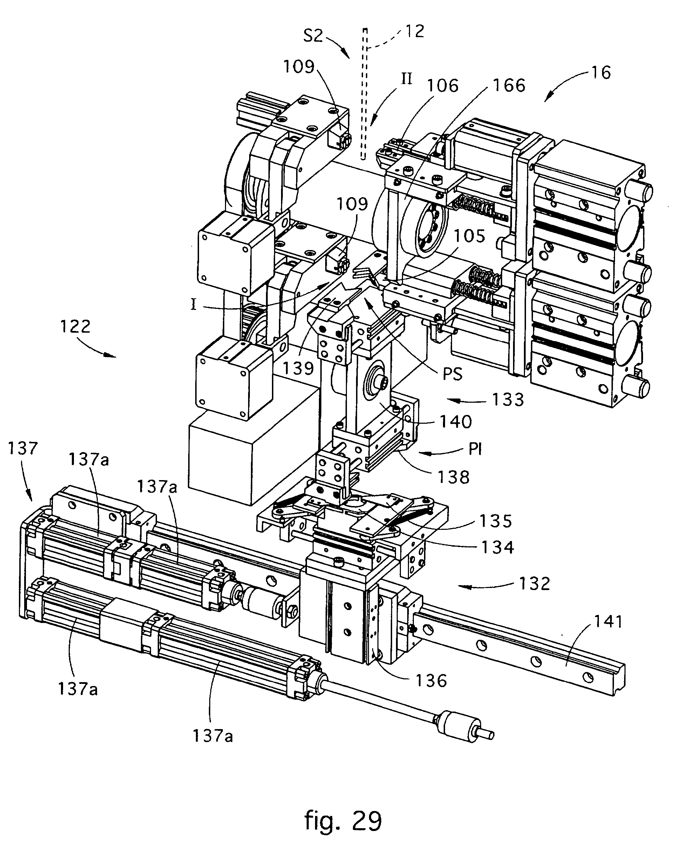

The first manipulation apparatus 122, located downstream of the store 19, consists of a first gripping member 132 and a second gripping member 133 (fig. 29).

The first gripping member 132 comprises a container 134, able to accommodate a graft 11 with the bud 11a facing downwards, making it protrude from its upper edge, a gripper 135, associated with the container 134, a vertical actuator 136 and a horizontal actuator 137 consisting of two pairs of cylinders 137a.

The container 134 is mounted on the vertical actuator 136 which allows it to move from a lowered position wherein it receives the graft 11, to a raised position assumed in order to give up the graft 11 to the second gripping member 133.

The vertical actuator 136 is terminally attached to the horizontal actuator 137, which is able to make it slide along a guide 141 in order to take it from an advanced position, wherein it arranges the container 134 below a specific channel 39a, 39b, 39c, 39d, in order to receive the graft 11 to be picked up, to a retracted position wherein it arranges the same container 134 in alignment with the second gripping member 133.

Advantageously, the container 134 is provided with a blower nozzle by means of which possible residues of the grafts 11 or other dirt are discharged from inside.

Structurally the gripper 135 is substantially like the gripper 48 described in the first embodiment of the machine 10 and is able to selectively close on the graft 11 just above the edge of the container 134.

The second gripping member 133 comprises a first gripper 138 and a second gripper 139 mounted on a rotary support 140 able to rotate by 180° to take each of them alternately from a lower position "PI" wherein it picks up the graft 11 from the gripper 135 of the first gripping member 132, to an upper position "PS" wherein it arranges the graft 11 towards the third group 16, in the correct position for grafting.

The second group 15 comprises, as described in the first embodiment, a separator device 52, a measuring and positioning unit 53 and a second manipulation apparatus 142 (figs. 24, 25 and 27).

The separator device 52 is structured like the one described in the first embodiment of the machine 10, differing substantially only in the presence of a single movable comb 59, a rotary loader 143 to replace the loading spurs 58, and a different constructive solution of the transfer unit 61.

The rotary loader 143 is arranged between the accumulation compartment 67 and the division zone 68 where the bundle of vines 12 is divided; it comprises a plurality of collection elements 144 mounted on belts 145 made to rotate by pulleys 146.

Each collection element 144 is able to be inserted cyclically inside the first pair of transport belts 56, picking up from them a desired quantity of vines 12 which it then discharges onto the fixed combs 57.

The separation of the vines 12 is then performed by the cycle of moving the movable combs 59 inside the fixed combs 57 as described before, until the vines 12 are arranged distanced from each other on the second pair of transport belts 60, which in this case have a plurality of teeth 60a, between which the vines 12 are arranged.

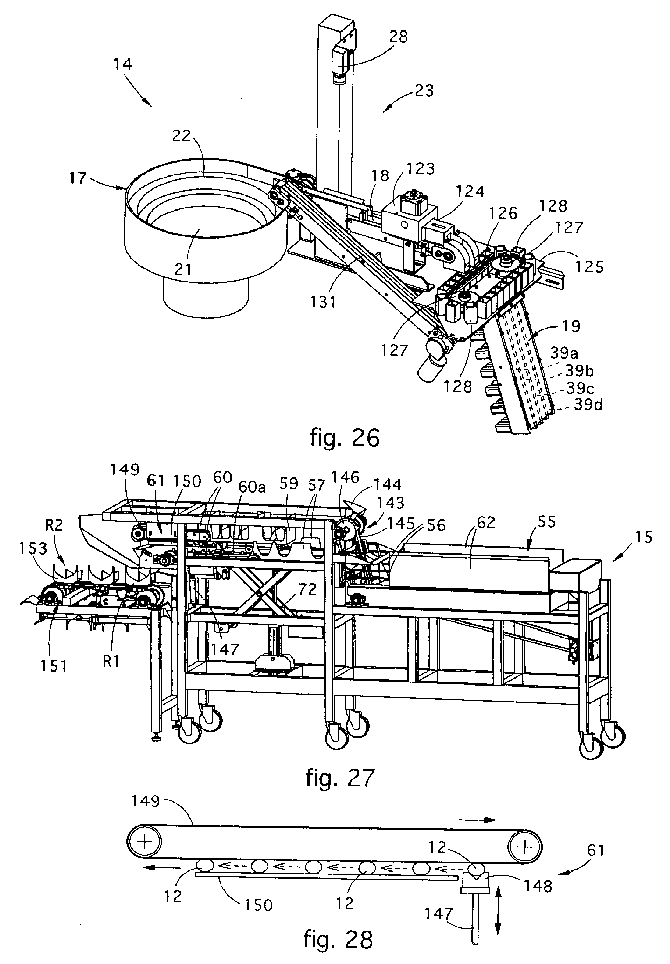

The transfer unit 61 comprises in this case a piston 147, substantially vertical, arranged inside the second pair of transport belts 60 and terminally provided with a pad 148, advantageously made of antifriction material, for example polyzene, a movable belt 149 and a substantially horizontal sliding plane 150 (fig. 28).

The sliding plane 150 is arranged under the movable belt 149, which protrudes with respect thereto at the two ends.

The piston 147 is arranged below one end of the movable belt 149 and moves in continuation, and in coordination with the feed of the second pair of transport belts 60, from a lowered position wherein it is below the latter, to a raised position wherein it moves close to the movable belt 149.

With every passage from the lowered position to the raised position, the piston 147 collects with the pad 148 a vine 12 located on the second pair of transport belts 60 and lifts it to take it into contact with the movable belt 149; due to the effect of the rotation of the latter, the vine 12 rolls on the sliding plane 150, traveling along its whole length, until it reaches the measuring and positioning unit 53.

The measuring and positioning unit 53 essentially comprises a chain-type transporter 151 with a horizontal feed, an orientation device 152 and the two optical detectors 89 and 120, the function of which has already been described in the description of the first form of embodiment of the machine 10.

The chain-type transporter 151 is provided with a plurality of housing cradles 153 having a substantially V-shaped section and mounted on relative sliders 154 movable transversely with respect to the direction of feed of the chain-type transporter 151.

Due to the effect of the advance of the chain-type transporter 151, each housing cradle 153 is progressively taken from a collection position "R1", wherein it collects a vine 12 from the sliding plane 150, to a release position "R2", wherein it gives up said vine 12 to the orientation device 152, and then returns to the collection position "R1".

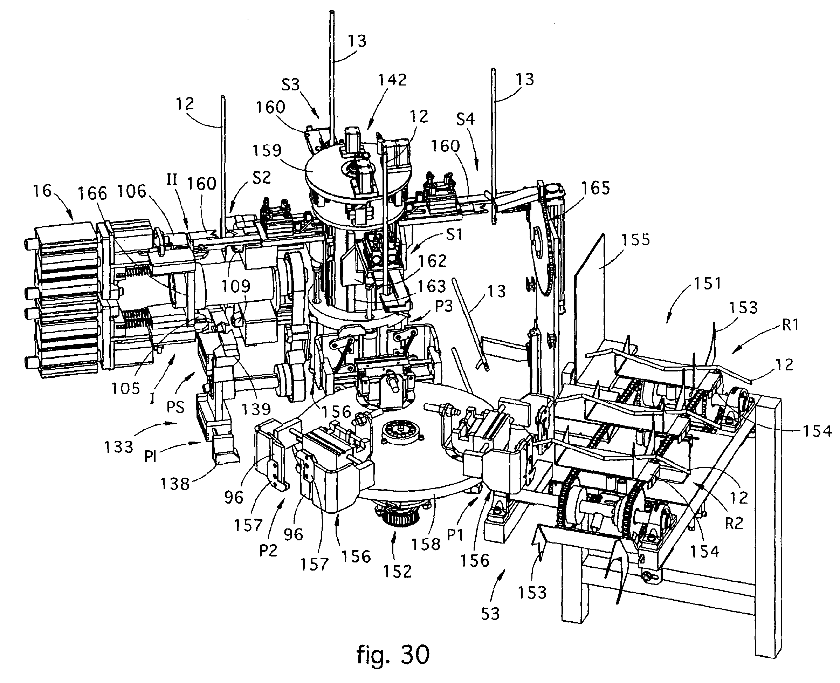

The conformation of the housing cradles 153 is such that each vine 12, when it is collected, is arranged slightly inclined towards the orientation device 152, abutting with its front end on an abutment wall 155 arranged frontally in correspondence with the collection position "R1" (fig. 30).

In this way all the vines 12 are arranged with the front end aligned along the same pre-defined positioning plane, and the optical detector 89 is able to identify, for each vine 12, the position of the first node 12a and to measure the distance thereof from said front end.

According to the value detected, the command and control unit 40 determines the distance between the first node 12a and the position where the vine 12 must be cut in order to perform the grafting; if this distance is too short, during the displacement of the housing cradle 153 from the collection position "R1" to the release position "R2", the relative slider 154 is made to advance by a desired travel, so that the first node 12a is then found, when the grafting is made, in the discard part 12b of the vine 12.

The orientation device 152 comprises a rotary platform 158, with a vertical axis of rotation, on which three grippers 156 are mounted, angled by 120° with respect to each other, able to hold the vines 12.

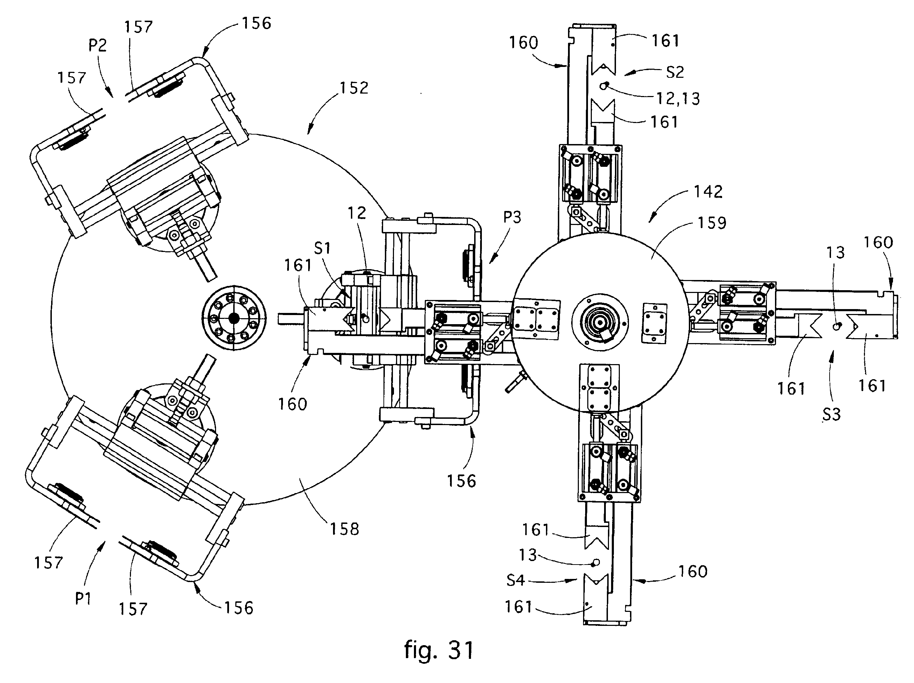

The rotary platform 158 is able to rotate step-wise so as to progressively take each gripper 156 to a first position "P1", to pick up a vine 12 from a housing cradle 153 located in the release position "R1", to a second stand-by position "P2", and a third position "P3" wherein it gives the vine 12 to the second manipulation apparatus 142 (figs. 30 and 31).

Each gripper 156 can selectively assume a lowered condition, wherein it has its respective jaws 157 substantially vertical in order to pick up the vine 12 from the housing cradle 153, and a raised condition wherein it is arranged rotated by 90° with respect to the lowered condition, arranging the jaws 157 horizontal in order to hold the vine 12 in a substantially vertical position and take it to the third position "P3".

Respective oscillating inserts 96 are associated with the jaws 157, of the type provided on the rear baffles 88 of the orientation device 86 of the first embodiment of the machine 10.

In the first position "P1", when the jaws 157 of the gripper 156 close on a vine 12, the oscillating inserts 96 allow to orient the vine 12 with the greater axis "d₂" substantially vertical, allowing the optical detector 120 to measure the value of its lesser axis "d₁" and therefore to supply the command and control unit 40 with the information necessary to pick up the graft 11 of the most appropriate class.

In this condition, the vine 12 is oriented so that, at the moment of grafting, its greater axis "d₂" is on the same plane as the greater axis "d₂" of the relative graft 11.

Should it be required to perform a grafting with the greater axis "d₂" of the vine 12 and of the corresponding graft 11 orthogonal to each other, the gripper 156 in the second position "P2" is able to rotate the orientation of the vine 12 by 90° in order to permit the subsequent grafting to be performed in the required way.

The second manipulation apparatus 142 comprises a turntable structure 159, rotating around a vertical axis, on which four grippers 160 are mounted, arranged angled by 90° with respect to each other and positioned at a height greater than that of the grippers 156.

The grippers 160 are shaped substantially like the grippers 98 and 99 of the second manipulator 54 described in the first embodiment of the machine 10.

They have their respective jaws 161 arranged horizontal in order to allow the vines 12 to be held in a substantially vertical position.

Each gripper 160 is also mounted on a relative support 162 able to slide vertically on guides 163 associated with the turntable structure 159; in this way the grippers 160 are selectively able to be raised and lowered, keeping their horizontal position.

The rotation of the turntable structure 159, which occurs in synchronized manner with the rotation of the rotary platform 158, determines the progressive movement of each gripper 160 into:
- a first station "S1", aligned with the third position "P3", wherein the vine 12 is picked up by a gripper 156 of the rotary platform 158;
- a second station "S2", wherein the vine 12 previously picked up is arranged in a position for grafting, in cooperation with the third group 16;
- a third station "S3", wherein the vine cutting 13 obtained by said grafting is subjected to paraffin treatment, in order to improve its mechanical resistance and prevent contamination from germs and/or molds, by immersing it in a tank 164 containing liquid paraffin;
- a fourth station "S4", wherein the vine cutting 13, treated with paraffin, is discharged from the grafting machine 10, in this case by means of a chain-type collector 165.

The third group 16 comprises, as in the first embodiment of the machine 10, two grafting units 105 and 106 and two matrixes 109 of the type previously described.

In this case too, the two matrixes 109 are arranged in a first work position "I" and a second work position "II", however the second is arranged above the first (fig. 29).

In this embodiment, the two grafting units 105 and 106 are mounted opposite each other on a rotary table 166 with a horizontal axis of rotation and have the knife 110 and thruster 111 movable horizontally, so that the grafting is performed on a vertical plane, instead of horizontal as in the first embodiment of the machine 10.

The rotary table 166 thus allows the alternate positioning of the two grafting units 105 and 106 in the first work position "I", in cooperation with the second gripping member 133 of the first group 14 and with a matrix 109 in order to cut the graft 11, and in the second work position "II" in cooperation with the gripper 160 of the turntable structure 159 and with the other matrix 109, in order to complete the grafting as seen previously.

In this second embodiment of the grafting machine 10 too, the command and control unit 40 provides to continuously coordinate the functioning of the first group 14, the second group 15 and the third group 16.

In this way, as soon as the optical detector 120 determines the measurement of the lesser axis "d₁" of a first vine 12, the container 134 of the first gripping member 132 is taken, with the gripper 135 open, to an advanced position, in correspondence with the channel 39a, 39b, 39c, 39d of the store 19 from which the graft 11 of an appropriate class can be picked up.

Subsequently, the gripper 135 is closed and the container 134 returned to the retracted position and then raised, in order to give up the graft 11 for example to the first gripper 138 of the second gripping member 133 which at that moment is in the lower position "PI".

Then, when the first gripper 138 moves to the upper position "PS", the first gripping member 132, according to the measurement of the optical detector 120 on a second vine 12, provides to pick up another graft 11, which it subsequently gives up to the second gripper 139 which in the meantime has been positioned in the lower position "PI".

In the upper position "PS" the graft 11, which is arranged vertically with the bud 11a facing upwards, and is held by the first gripper 138, is cut by the grafting unit 105 or 106 which at that moment is in the first work position "I", which is then taken to the second work position "II", holding the cut graft 11, while the discard part 11b is discharged by the first gripper 138.

In the meantime the first vine 12 has been transported by the gripper 156 of the rotary platform 158 from the collection position "R1" to the release position "R2", where the gripper 160 of the turntable structure 159, which at that moment was in the first station "S1", has been lowered, picking it up and taking it to the second station "S2", kept vertical and with the front end facing downwards.

In this condition, the first vine 12 is in the second work position "II" where the grafting unit 105 or 106 provides to cut it, coupling it with the graft 11 that it is holding, in order to complete the grafting.

While this is happening, the other grafting unit 106 or 105, in the first work position, provides to cut the graft 11 to be grafted onto the second vine 12.

The vine cutting 13 thus obtained is still held by the gripper 160 of the turntable structure 159, which then moves to the third station "S3" and, lowering itself, immerses the part affected by the grafting into the tank 164 containing the liquid paraffin.

Subsequently, the gripper 160 moves to the fourth station "S4" to give the paraffin-treated vine cutting 13 to the chain-type collector 165, or to another discharge device.

The machine 10 therefore allows to produce vine cuttings 13 completely automatically, with a productivity of more than 1000 graftings per hour, indicatively 1500 graftings per hour, since it is only necessary to introduce the grafts 11 into the central container 21 of the vibrating transporter 17, and the vines 12 inside the accumulation compartment 67 of the containing structure 55.

It is clear that modifications and/or additions of parts and/or steps may be made to the machine 10, and the relative grafting method, as described heretofore, without departing from the field and scope of the present invention.

For example, the first group 14 may include a store 19 organized according to a greater number of classes of grafts 11, and provide different means to move and discharge the grafts 11.

Or the second group 15 may include a different system to separate the vines 12.

Furthermore, the measurement and selection section 23 of the first group 14 may be able to measure the greater axis "d₂" of the grafts 11 in order to determine the class thereof; in this case the measuring and positioning unit 53 of the second group 15 is also able to measure the greater axis "d₂" of the vines 12 in order to determine that the most appropriate grafts 11 to be coupled with said vines 12 are picked up.

Moreover, although the present invention has been described with reference to specific examples, a person of skill in the art shall be able to perfect other equivalent forms of grafting machine and method, all of which shall come within the field and scope of the present invention.

## Claims

1. Grafting machine for vine cuttings or other vegetable varieties (13) obtained by coupling together through grafting a first wood, or graft (11), provided with at least a bud (11a) at one end, and a second wood or vine (12), wherein the machine comprises at least a grafting group (16), able to automatically perform the grafting of at least one graft (11) and at least one vine (12), a first automatic feed and separation group (14) and a second automatic feed and separation group (15), **characterized in that** said first automatic feed and separation group (14) comprises first manipulation means (20, 122) able to separate and pick up at least one graft (11) at a time from a pick-up position where they are located loose, and to position at least said one graft (11), having a section correlated (d1, d2) to the section of said vine (12), in correspondence with a zone predisposed for grafting associated with said grafting group (16), and measurement and selection means (23, 24) able to detect at least a section size (d₁, d₂) of each individual graft (11) and the orientation of said bud (11a) along said separation and transport means (17, 18);
and said second automatic feed and separation group (15) comprises second manipulation means (54, 142) able to pick up one vine (12) at a time from a pick-up position where they are located loose and to position said one vine (12) in correspondence with said zone predisposed for grafting.

2. Grafting machine as in claim 1, **characterized in that** said first (14) and second group (15) and said grafting group (16) are managed and coordinated with respect to each other by a command and control unit (40).

3. Grafting machine as in claim 1 or 2, **characterized in that** said first group (14) comprises:
- separation and transport means (17, 18) able to separate said grafts (11) from each other and to arrange them one after the other;
- storage and division means (19) of said grafts (11) according to the section size (d₁, d₂); and
- said first manipulation means (20, 122).

4. Grafting machine as in claim 3, **characterized in that** said separation and transport means comprise at least a vibrating transporter (17) and a conveyor belt (18), said vibrating transporter (17) having a container (21) able to accommodate said grafts (11) loose, and a channel (22) along which said grafts (11) are able to be arranged one after the other, said conveyor belt (18) having one end located as an extension of said channel (22) and its opposite end arranged in cooperation with said storage and division means (19).

5. Grafting machine as in claim 3 or 4, **characterized in that** said measurement and selection means (23) comprise at least:
- an optical detector (24, 28) to detect at least the orientation of said bud (11a) and said section size (d₁, d₂) ;
- an expulsion device (25, 29, 123) to discharge from said separation and transport means (17, 18) the grafts (11) having said bud (11a) oriented in an incorrect manner and/or said section size (d₁, d₂) of a non-suitable value; and
- a conveyer device (30) to selectively divert the path of each of said grafts (11) and direct them to a specific part of said storage and division means (19) according to at least said section size (d₁, d₂).

6. Grafting machine as in claim 5, **characterized in that** said measurement and selection means (23) comprise a turnover device (124) able to selectively invert the orientation of said bud (11a) by making said graft (11) rotate by 180° while it is in transit on said separation and transport means (17, 18).

7. Grafting machine as in claim 3, **characterized in that** said storage and division means (19) comprise a plurality of containing sectors (39a, 39b, 39c, 39d) each one associated with a respective range of said section size(d₁, d₂).

8. Grafting machine as in claim 7, **characterized in that** each of said containing sectors (39a, 39b, 39c, 39d) is divided into a plurality of housing seating (43a, 43b, 43c, 43d, 43e) each of which is able to accommodate a single graft (11) arriving from said separation and transport means (17, 18) or from a housing seating (43a, 43b, 43c, 43d, 43e) adjacent thereto.

9. Grafting machine as in any claim from 3 to 8 inclusive, **characterized in that** said first manipulation means (20, 122) comprise at least a gripper (48, 135, 138, 139) movable from a first position to pick up an individual graft (11) from said storage and division means (19) in said first specific position of said zone predisposed for grafting.

10. Grafting machine as in any claim hereinbefore **characterized in that** said second group (15) comprises:
- separation and transport means (57) able to separate said vines (12), supplied in bundles and/or loose, and to arrange them one after the other;
- orientation and alignment means (86, 152) for each individual vine (12);
- measurement means able to detect at least a section size (d₁, d₂) of said individual vine (12) ; and
- said second manipulation means (54, 142).

11. Grafting machine as in claim 10, **characterized in that** said separation means (57) comprise in series:
- a first transport member (56) for vines (12) arranged loose;
- a fixed comb device (57), defining a plurality of hollows (57a, 57b, 57c) to accommodate said vines (12);
- a loading device (58, 143) able to pick up a defined quantity of vines (12) from said first transport member (56) and to unload them into at least some of the hollows (57a, 57b, 57c) of said fixed comb device (57);
- a movable comb device (59) able both to translate longitudinally with respect to said fixed comb device (57) and also to be raised and lowered with respect thereto, said movable comb device (59) being provided with teeth (59a) able to intersect said hollows (57a, 57b, 57c) geometrically in order to disentangle said vines (12), progressively separate them and make them advance, during its lifting/lowering and translation movements;
- a second transport member (60) on which said movable comb device (59) is able to deposit said separated vines (12); and
- a transfer unit (61) able to receive said vines (12) from said second transport member (60) and to take each of them individually into cooperation with said orientation and alignment means (86, 152).

12. Grafting machine as in claim 10 or 11, **characterized in that** said orientation and alignment means (86, 152) comprise gripper elements (88, 156) able to selectively assume a closed position in which, by means of respective oscillating inserts (96), they are able to grip an individual vine (12), making it rotate on itself so that an axis (d₂) of the section of said vine (12) is arranged on a predetermined plane, and an open position in which they are able to release said vine (12), in order to give it up to said second manipulation means (54, 142).

13. Grafting machine as in claim 12, **characterized in that** said orientation and alignment means (152) comprise a plurality of said gripper elements (156), each of which is able to progressively move to a first position (P1), wherein it picks up an individual vine (12) arriving from said transfer unit (61), to a second stand-by position (P2), and a third position (P3) wherein it gives up said vine (12) to said second manipulation means (142).

14. Grafting machine as in claim 13, **characterized in that** each of said gripper elements (156) is able to make the orientation of said vine rotate by 90°, so that said axis (d₂) is arranged on a plane orthogonal to said predetermined plane.

15. Grafting machine as in any claim from 10 to 14 inclusive, **characterized in that** said measuring means comprise a first measurer (89) able to detect the position of at least a first node (12a) present on said vine (12), and a second measurer (120) able to detect said section size (d₁, d₂) of said individual vine (12).

16. Grafting machine as in any claim from 10 to 15 inclusive, **characterized in that** said second manipulation means (54, 142) comprise at least a pair of grippers (98, 99, 160) able to move alternately at least from a first position or station (S1) close to said orientation and alignment means (86, 152), in order to pick up said vine (12), to a second position or station (S2) close to said grafting group (16) in order to position said vine (12) in said second specific position of said zone predisposed for grafting.

17. Grafting machine as in claim 16, **characterized in that** said second manipulation means (142) comprise four grippers (160), each one able to progressively move to said first position or station (S1), to said second position or station (S2), to a third position or station (S3), wherein it subjects the vine cutting (13) obtained from said vine (12) to a treatment in paraffin, and to a fourth position or station (S4) wherein it discharges said vine cutting (13).

18. Grafting machine as in claims 13 and 16 or 17, **characterized in that** said gripper elements (156) are associated with first rotation means (158) able to take them progressively to said positions (P1, P2, P3) and said grippers (160) are associated with second rotation means (159) able to take them progressively to said positions or stations (S1, S2, S3, S4) and that said first rotation means (158) and said second rotation means (159) move in a reciprocally synchronized manner.

19. Grafting machine as in any claim hereinbefore, **characterized in that** said grafting group (16) comprises two grafting units (105, 106) able to be positioned alternately in a first work position (I) to perform a first step of the grafting comprising at least the cutting of said graft (11), in cooperation with said first group (14), and in a second work position (II) in order to complete the grafting by cutting said vine (12) and coupling the latter with said graft (11) in cooperation with said second group (15).

20. Grafting machine as in claim 19, **characterized in that** said grafting units (105, 106) are mounted on rotating table means (107, 166) able to perform a rotation of ±180° in order to take them alternately to said work positions (I, II).

21. Grafting machine as in claim 19 or 20, **characterized in that** it comprises at least two matrixes (109), arranged respectively in said first work position (I) and in said second work position (II), able to cooperate alternately with said first grafting unit (105) and with said second grafting unit (106).

22. Grafting machine as in claim 21, **characterized in that** each of said grafting units (105, 106) comprises:
- a knife (110) able to move selectively from a first position, wherein it is located on one side of the plane (A) on which grafting is performed, to a second position wherein it is located on the opposite side of said plane (A) in order to cut said graft (11.) and/or said vine (12) in cooperation with one of said matrixes (109); and
- a thruster member (111), cooperating with said knife (110) and with said matrix (109), able to move from a retracted position with respect to said knife (110) to an advanced position wherein it is located in cooperation with said plane (A) in order to align said graft (11) with said vine (12).

23. Grafting machine as in claim 22, **characterized in that** said matrix (109) is opposite said knife (110) and is able to move from a position distanced from said plane (A) to a position close up and in cooperation with said knife (110), in proximity with said plane (A) in order to cut said graft (11) and/or said vine (12).

24. Grafting machine as in claim 22, **characterized in that** said knife (110), after cutting said graft (11) in said first grafting step, is able to hold the part of said graft (11) to be coupled with said vine (12) in order to take it from said first work position (I) to said second work position (II).

25. Grafting machine as in claim 24, **characterized in that** in said second work position (II), said knife (110) is able to cut said vine (12) holding said part of the graft (11), and **in that** said thruster member (111) is able to thrust said part of the graft (11) into alignment with said vine (12) cut on said plane (A) in order to complete the grafting.

26. Grafting method for vine cuttings or other vegetable varieties (13) obtained by coupling together through grafting a first wood, or graft (11), provided with at least a bud (11a) at one end, and a second wood or vine (12), **characterized in that** it comprises the following steps:
- at least one graft (11) at a time, with a determinate section size (d₁, d₂), is automatically separated from a plurality of grafts (11) located loose and in a pick-up position;
- at least one vine (12) at a time, with a determinate section size (d₁, d₂), is automatically separated from a plurality of vines (12) located loose and in a pick-up position;
- pick-up means (20, 122) for the grafts (11) are driven to pick up a graft (11) having a section size (d₁, d₂) correlated to that of said vine (12), and to arrange it in a zone predisposed for grafting in correspondence with a grafting group (16);
- pick-up means (54, 142) for the vines (12) are driven to pick up said vine (12) and arrange it in said zone predisposed for grafting;
- said grafting group (16) is driven to automatically perform the grafting.

27. Method as in claim 26, **characterized in that** said grafting group (16) performs the grafting in two parts: a first part wherein it cuts said graft (11) in a first specific positions of said zone predisposed for grafting, and a second part wherein it cuts said vine (12) and couples it with said graft (11) in a second specific position of said zone predisposed for grafting.

28. Method as in claims 26 and 27, **characterized in that** said grafting group (16) simultaneously performs said second part of the grafting of a first graft (11) and a mating vine (12), and said first part of the grafting on a second graft (11).

29. Method as in any claim from 26 to 28 inclusive **characterized in that** it comprises another step wherein the vine cutting (13) obtained from said grafting is subjected to a paraffin treatment.

## Patentansprüche

1. Veredelungsvorrichtung für Rebenstecklinge oder andere Pflanzensorten (13), die durch Koppeln mittels Veredelns eines mit einer ersten Knospe (11a) an einem Ende ausgestatteten ersten Holzes, oder Edelreises (11), und eines zweiten Holzes oder Rebe (12) erhalten werden, wobei die Vorrichtung aufweist: zumindest eine Veredelungsgruppe (16), die geeignet ist, das Veredeln zumindest eines Edelreises (11) und zumindest einer Rebe (12) automatisch durchzuführen, eine erste automatische Versorgungs- und Trennungsgruppe (14) und eine zweite automatische Versorgungs- und Trennungsgruppe (15), **dadurch gekennzeichnet, dass** die erste automatische Versorgungs- und Trennungsgruppe (14) aufweist:
erste Eingriffsmittel (20, 122), die geeignet sind, zumindest ein Edelreis (11) einzeln aus einer Aufnahmestelle, wo sie locker angeordnet sind, zu trennen und aufzunehmen und zumindest das eine Edelreis (11), das einen zu dem Abschnitt der Rebe (12) entsprechenden Abschnitt (d1, d2) aufweist, in Übereinstimmung mit einem zum Veredeln vorbestimmten Bereich, welcher der Veredelungsgruppe (16) zugeordnet ist, anzuordnen, und Vermessungs- und Auswahlmittel (23, 24), die geeignet sind, zumindest eine Abschnittsgröße (d1, d2) jedes einzelnen Edelreises (11) und die Orientierung der Knospe (11a) entlang der Auswahl- und Beförderungsmittel (17, 18) zu bestimmen;
und die zweite automatische Versorgungs- und Trennungsgruppe (15) zweite Eingriffsmittel (54, 142) aufweist, die geeignet sind, eine Rebe (12) einzeln aus einer Aufnahmestelle, wo sie locker angeordnet sind, aufzunehmen und die eine Rebe (12) in Übereinstimmung mit dem zum Veredeln vorbestimmten Bereich anzuordnen.

2. Veredelungsvorrichtung nach Anspruch 1, **dadurch gekennzeichnet, dass** die erste (14) und zweite Gruppe (15) und die Veredelungsgruppe (16) durch eine Befehls- und Steuerungseinheit (40) in Bezug verwaltet und zueinander koordiniert werden.

3. Veredelungsvorrichtung nach einem der Ansprüche 1 oder 2, **dadurch gekennzeichnet, dass** die erste Gruppe (14) aufweist:
- Trennungs- und Transportmittel (17, 18), die geeignet sind, die Edelreiser (11) voneinander zu trennen und nebeneinander anzuordnen;
- Aufbewahrungs- und Einteilungsmittel (19) der Edelreiser (11) gemäß der Abschnittsgröße (d1, d2); und
- die ersten Eingriffsmittel (20, 122).

4. Veredelungsvorrichtung nach Anspruch 3, **dadurch gekennzeichnet, dass** die Trennungs- und Transportmittel zumindest einen vibrierenden Transporter (17) und ein Förderband (18) aufweisen, wobei der vibrierende Transporter (17) aufweist: ein Behältnis (21), das geeignet ist, die Edelreiser (11) locker aufzunehmen, und einen Kanal (22), entlang dem die Edelreiser (11) einer nach dem anderen angeordnet werden können, wobei das Förderband (18) ein Ende aufweist, das als Erweiterung des Kanales (22) angeordnet ist, und sein gegenüberliegendes Ende sich in Zusammenwirkung mit den Aufbewahrungs- und Einteitungsmitteln (19) befindet.

5. Veredelungsvorrichtung nach einem der Ansprüche 3 oder 4, **dadurch gekennzeichnet, dass** die Vermessungs- und Auswahlmittel (23) zumindest aufweisen:
- einen optischen Detektor (23, 28) zum Bestimmen zumindest der Orientierung der Knospe (11a) und der Abschnittsgröße (d1, d2);
- ein Auswerfgerät (25, 29, 123) zum Auswerfen der Edelreiser (11), bei denen die Knospe (11a) in einer nicht richtigen Weise ausgerichtet sind und/oder die Abschnittsgröße (d1, d2) einen ungeeigneten Wert aufweist, aus den Trennungs- und Transportmitteln (17, 18); und
- ein Fördergerät (30) zum wahlweisen Umleiten des Weges jedes einzelnen der Edelreiser (11) und zum Leiten dieser hin zu einem bestimmten Teil der Aufbewahrungs- und Einteilungsmittel (19) gemäß zumindest der Abschnittsgröße (d1, d2).

6. Veredelungsvorrichtung nach Anspruch 5, **dadurch gekennzeichnet, dass** die Vermessungs- und Auswahlmittel (23) ein Umwälzungsgerät (124) aufweisen, das geeignet ist, wahlweise die Orientierung der Knospe (11a) zu invertieren, indem das Edelreis (11) dazu veranlasst wird, sich 180° zu drehen, während es auf den Trennungs- und Transportmitteln (17, 18) befördert wird.

7. Veredelungsvorrichtung nach Anspruch 3, **dadurch gekennzeichnet, dass** die Aufbewahrungs- und Einteilungsmittel (19) eine Vielzahl von Aufbewahrungsabschnitten (39a, 39b, 39c, 39d) aufweisen, von denen jeder einem entsprechenden Bereich der Abschnittsgröße (d1, d2) zugeordnet ist.

8. Veredelungsvorrichtung nach Anspruch 7, **dadurch gekennzeichnet, dass** jeder der Aufbewahrungsabschnitte (39a, 39b, 39c, 39d) in eine Vielzahl von Gehäusefassungen (43a, 43b, 43c, 43d, 43e) aufgeteilt ist, von denen jede einzelne geeignet ist, einen einzelnen aus den Trennungs- und Transportmitteln (17, 18) oder aus einer benachbarten Gehäusefassung (43a, 43b, 43c, 43d, 43e) ankommenden Edelreis (11) aufzunehmen.

9. Veredelungsvorrichtung nach einem der Ansprüche von einschließlich 3 bis 8, **dadurch gekennzeichnet, dass** die ersten Eingriffsmittel (20, 122) zumindest einen Greifer (48, 135, 138, 139) aufweisen, der aus einer ersten Position zum Aufnehmen eines einzelnen Edelreises (11) aus den Aufbewahrungs- und Einteilungsmitteln (19) in die erste bestimmte Position des zum Veredeln vorbestimmten Bereichs bewegbar ist.

10. Veredelungsvorrichtung nach einem der vorangegangenen Ansprüche, **dadurch gekennzeichnet, dass** die zweite Gruppe (15) aufweist:
- Trennungs- und Transportmittel (57), die geeignet sind, die Reben (12), die in Bündeln und/oder locker zugeführt werden, zu trennen und diese eine nach der anderen anzuordnen;
- Orientierungs- und Ausrichtungsmittel (86, 152) für jede einzelne Rebe (12);
- Vermessungsmittel, die geeignet sind, zumindest eine Abschnittsgröße (d1, d2) der einzelnen Reben (12) zu bestimmen; und
- die zweiten Eingriffsmittel (54, 142).

11. Veredelungsvorrichtung nach Anspruch 10, **dadurch gekennzeichnet, dass** die Trennungsmittel (57) aufeinander folgend aufweisen:
- ein erstes Transportelement (56) für Reben (12), die locker angeordnet sind;
- ein festes Kammgerät (57), welches eine Vielzahl von Hohlräume (57a, 57b, 57c) zum Aufnehmen der Reben (12) bestimmt;
- ein Ladegerät (58, 143), das geeignet ist, eine bestimmte Menge von Reben (12) aus dem ersten Transportelement (56) aufzunehmen und diese in zumindest einige der Hohlräume (57a, 57b, 57c) des festen Kammgeräts zu entladen;
- eine bewegbares Kammgerät (59), das geeignet ist, sowohl sich mit Bezug auf das befestigte Kammgerät (57) der Länge nach verschiebend zu bewegen und auch mit Bezug darauf angehoben oder abgesenkt zu werden, wobei das bewegbare Kammgerät (59) mit Zähnen (59a) ausgestattet ist, die geeignet sind, die Hohlräume (57a, 57b, 57c) während seiner aufwärts/abwärts und verschiebenden Bewegungen geometrisch zu kreuzen, um die Reben (12) zu entwirren, diese fortschreitend zu trennen und diese vorwärts zu bewegen;
- ein zweites Transportelement (60), auf dem das bewegbare Kammgerät (59) geeignet ist, die getrennten Reben (12) abzulegen; und
- eine Transfereinheit (61), die geeignet ist, die Reben (12) aus dem zweiten Transportelement (60) zu empfangen und jede dieser einzeln zur Zusammenwirkung mit den Orientierungs- und Ausrichtungsmitteln (86, 152) zu bewegen.

12. Veredelungsvorrichtung nach Anspruch 10 oder 11, **dadurch gekennzeichnet, dass** die Orientierung- und Ausrichtungsmittel (86, 152) Greifelemente (88, 156) aufweisen, die geeignet sind, wahlweise eine geschlossene Position, in der sie, mit Hilfe von entsprechend schwingenden Einschüben (96), geeignet sind, eine einzelne Rebe (12) zu greifen, wodurch diese veranlasst wird, sich um sich selbst zu drehen, sodass eine Achse (d2) des Abschnitts der Rebe (12) in einer vorbestimmten Ebene angeordnet wird, und eine offene Position anzunehmen, in der sie geeignet sind, die Rebe (12) loszulassen, um diese an die zweiten Eingriffsmittel (54, 142) abzugeben.

13. Veredelungsvorrichtung nach Anspruch 12, **dadurch gekennzeichnet, dass** die Orientierungs- und Ausrichtungsmittel (152) eine Vielzahl der Greifelemente (156) aufweist, von denen jedes geeignet ist, sich fortschreitend zu einer erste Position (P1), in der es eine einzelne aus der Transfereinheit (61) ankommende Rebe (12) aufnimmt, zu einer zweiten Warteposition (P2) und einer dritten Position (P3) zu bewegen, in der es die Rebe (12) an die zweiten Eingriffsmittel (142) abgibt.

14. Veredelungsvorrichtung nach Anspruch 13, **dadurch gekennzeichnet, dass** jedes der Greifelemente (156) geeignet ist, die Orientierung der Rebe zu veranlassen, sich um 90° zu drehen, sodass die Achse (d2) in einer Ebene angeordnet ist, die orthogonal zu der vorbestimmten Ebene liegt.

15. Vexedelungsvorrichtung nach einem der Anspruche von einschließlich 10 bis 14, **dadurch gekennzeichnet, dass** die Vermessungsmittel aufweisen: einen ersten Vermesser (89), der geeignet ist, die Position zumindest eines ersten sich auf der Rebe (12) befindenden Knotens (12a) zu bestimmen, und einen zweiten Vermesser (120), der geeignet ist, die Abschnittsgröße (d1, d2) der einzelnen Rebe (12) zu bestimmen.

16. Veredelungsvorrichtung nach einem der Ansprüche von einschließlich 10 bis 15, **dadurch gekennzeichnet, dass** die zweiten Eingriffsmittel (54, 142) zumindest ein Paar von Greifern (98, 99, 160) aufweisen, die geeignet sind, sich abwechselnd zumindest von einer ersten Position oder Station (S1) nahe bei den Orientierungs- und Ausrichtungsmitteln (86, 152), zum Aufnehmen der Rebe (12), zu einer zweiten Position oder Station (S2) nahe bei der Veredelungsgruppe (16), zum Anordnen der Rebe (12) in die zweite bestimmte Position des zum Veredeln vorbestimmten Bereichs, zu bewegen.

17. Veredelungsvorrichtung nach Anspruch 16, **dadurch gekennzeichnet, dass** die zweiten Eingriffsmittel (142) vier Greifer (160) aufweisen, von denen jeder geeignet ist, sich fortschreitend zu der ersten Position oder Station (S1), zu der zweiten Position oder Station (S2), zu einer dritten Position oder Station (S3), in der es den aus der Rebe (12) erhaltenen Rebensteckling (13) einer Behandlung in Paraffin unterzieht, und zu einer vierten Position oder Station (S4) zu bewegen, in der es den Rebensteckling (13) abgibt.

18. Veredelungsvorrichtung nach den Ansprüchen 13 und 16 oder 17, **dadurch gekennzeichnet, dass** die Greifelemente (156) ersten Drehmittel (158) zugeordnet sind, die geeignet sind, diese fortschreitend zu den Positionen (P1, P2, P3) zu bewegen, und die Greifer (160) zweiten Drehmitteln (159) zugeordnet sind, die geeignet sind, diese fortschreitend zu den Positionen oder Stationen (S1, S2, S3, S4) zu bewegen, und dass die ersten Drehmittel (158) und die zweiten Drehmittel (159) sich in einer umgekehrt synchronisierten Weise bewegen.

19. Veredelungsvorrichtung nach einem der vorangegangenen Ansprüche, **dadurch gekennzeichnet, dass** die Veredelungsgruppe (16) zwei Veredelungseinheiten (105, 106) aufweist, die geeignet sind, abwechselnd in eine erste Arbeitsposition (I), um, in Zusammenwirkung mit der ersten Gruppe (14), einen ersten Schritt des Veredelns durchzuführen, der zumindest das Schneiden des Edelreises (11) umfasst, und in eine zweite Arbeitsposition (II) bewegt zu werden, um die Veredelung durch Schneiden der Rebe (12) und Koppeln der letzteren mit dem Edelreis (11) in Zusammenwirkung mit der zweiten Gruppe (15) zu vervollständigen.

20. Veredelungsvorrichtung nach Anspruch 19, **dadurch gekennzeichnet, dass** die Veredelungseinheiten (105, 106) auf drehenden Tischmitteln (107, 166) montiert sind, die geeignet sind, eine Drehung von ±180° durchzuführen, um diese abwechselnd in die Arbeitspositionen (I, II) zu bewegen.

21. Veredelungsvorrichtung nach einem der Ansprüche 19 oder 20, **dadurch gekennzeichnet, dass** sie zumindest zwei Matrizen (109) aufweist, die entsprechend in der ersten Arbeitsposition (I) und in der zweite Arbeitsposition (II) angeordnet sind, die geeignet sind, abwechselnd mit der ersten Veredelungseinheit (105) und mit der zweiten Veredelungseinheit (106) zusammenzuwirken.

22. Veredelungseinheit nach Anspruch 21, **dadurch gekennzeichnet, dass** jede der Veredelungseinheiten (105, 106) aufweist:
- ein Messer (110), das geeignet ist, sich wahlweise aus einer ersten Position, in der es auf einer Seite der Ebene (A) angeordnet ist, in der das Veredeln durchgeführt wird, in eine zweite Position zu bewegen, in der es auf der gegenüberliegenden Seite der Ebene (A) angeordnet ist, um das Edelreis (11) und/oder die Rebe (12) in Zusammenwirkung mit einer der Matrizen (109) zu schneiden; und
- ein mit dem Messer (110) und der Matrix (109) zusammenwirkendes Schubelement (111), das geeignet ist, sich von einer mit Bezug auf das Messer (110) zurückgezogenen Position zu einer vorstehenden Position zu bewegen, in der es sich in Zusammenwirkung mit der Ebene (A) befindet, um das Edelreis (11) mit der Rebe (12) auszurichten.

23. Veredelungsvorrichtung nach Anspruch 22, **dadurch gekennzeichnet, dass** die Matrix (109) dem Messer (110) gegenüberliegt und geeignet ist, sich aus einer von der Ebene (A) entfernten Position zu einer Position nahe bei und in Zusammenwirkung mit dem Messer (110) zu bewegen, um das Edelreis (11) und/oder die Rebe (12) zu schneiden.

24. Veredelungsvorrichtung nach Anspruch 22, **dadurch gekennzeichnet, dass** das Messer (110), nach dem Schneiden des Edelreises (11) in dem ersten Veredelungsschritt, geeignet ist, den mit der Rebe (12) zu koppelnden Teil des Edelreises (11) festzuhalten, um ihn aus der ersten Arbeitsposition (I) zu der zweiten Arbeitsposition (II) zu nehmen.

25. Veredelungsvorrichtung nach Anspruch 24, **dadurch gekennzeichnet, dass** in der zweiten Arbeitsposition (II) das Messer (110) in der Lage ist, die Rebe (12), die den Teil des Edelreises (11) hält, zu schneiden, und dass das Schubelement (111) geeignet ist, den Teil des Edelreises (11) in eine mit der in der Ebene (A) geschnittenen Rebe (12) ausgerichteten Position zu schieben, um das Veredeln zu vervollständigen.

26. Veredelungsverfahren für Rebenstecklinge und andere Pflanzensorten (13), die durch Koppeln mittels Veredelns eines mit einer mindestens einer Knospe (11a) an einem Ende ausgestatteten ersten Holzes, oder Edelreises (11), und eines zweiten Holzes oder Rebe (12) erhalten werden, **dadurch gekennzeichnet, dass** es die folgenden Schritte aufweist:
- zumindest ein Edelreis (11), mit einer festgelegten Abschnittsgröße (d1, d2), wird einzeln aus einer Vielzahl von Edelreiser (11) automatisch getrennt, die locker und in einer Aufnahmestelle angeordnet sind;
- zumindest eine Rebe (12), mit einer festgelegten Abschnittsgröße (d1, d2), wird einzeln aus einer Vielzahl von Reben (12) automatisch getrennt, die locker und in einer Aufnahmestelle angeordnet sind;
- Aufnahmemittel (20, 122) für die Edelreiser (11) werden angetrieben, um einen Edelreis (11) mit einer Abschnittsgröße (d1, d2), die der der Rebe (12) entspricht, aufzunehmen und es in einem zum Veredeln vorbestimmten Bereich in Übereinstimmung mit einer Veredelungsgruppe (16) anzuordnen;
- Aufnahmemittel (54, 142) für die Reben (12) werden angetrieben, um die Rebe (12) aufzunehmen und sie in dem zum Veredeln vorbestimmten Bereich anzuordnen;
- die Veredelungsgruppe (16) wird angetrieben, um das Veredeln automatisch durchzuführen.

27. Verfahren nach Anspruch 26, **dadurch gekennzeichnet, dass** die Veredelungsgruppe (16) das Veredeln in zwei Teilen durchführt: einem ersten Teil, in dem sie das Edelreis (11) in einer ersten bestimmten Position des zum Veredeln vorbestimmten Bereichs schneidet, und einem zweiten Teil, in dem sie die Rebe (12) schneidet und sie mit dem Edelreis (11) in einer zweiten bestimmten Position des zum Veredeln vorbestimmten Bereichs koppelt.

28. Verfahren nach den Ansprüchen 26 und 27, **dadurch gekennzeichnet, dass** die Veredelungsgruppe (16) gleichzeitig den zweiten Teil des Veredelns eines ersten Edelreiser (11) und einer zu paarenden Rebe (12) und den ersten Teil des Veredelns eines zweiten Edelreises (11) durchführt.

29. Verfahren nach einem der Ansprüche von einschließlich 26 bis 28, **dadurch gekennzeichnet, dass** es einen weiteren Schritt aufweist, bei dem der durch das Veredeln erhaltene Rebensteckling (13) einer Paraffin-Behandlung unterzogen wird.

## Revendications

1. Appareil à greffage pour les boutures de vignes ou autres variétés de légumes (13) obtenues en accouplant par greffage un premier bois, ou greffon (11), portant au moins un bourgeon (11a) à l'une de ses extrémités, et un second bois ou rameau de vigne (12), l'appareil comprenant au moins un groupe de greffage (16) capable d'effectuer automatiquement le greffage d'au moins un greffon (11) et d'au moins un rameau de vigne (12), un premier groupe d'alimentation et de séparation automatiques (14) et un second groupe d'alimentation et de séparation automatiques (15),
**caractérisé en ce que** ledit premier groupe d'alimentation et de séparation automatiques (14) comprend des premiers moyens de manipulation (20, 122) capables de séparer et de prélever au moins un greffon (11) à la fois, à partir d'une position de prélèvement où ils sont en vrac, et de placer au moins ledit un greffon (11), dont la section (d₁, d₂) est corrélée à celle dudit rameau de vigne (12), au niveau d'une zone prévue pour le greffage et associée audit groupe de greffage (16), ainsi que des moyens de mesure et de sélection (23, 24) capables de détecter au moins une dimension de section (d₁, d₂) de chaque greffon individuel (11) et l'orientation dudit bourgeon (1 la) le long desdits moyens de séparation et de transport (17, 18) ;
et **en ce que** ledit second groupe d'alimentation et de séparation automatiques (15) comprend des seconds moyens de manipulation (54, 142) capables de prélever un rameau de vigne (12) à la fois, à partir d'une position de prélèvement où ils sont en vrac, et de le placer au niveau de la zone prévue pour le greffage.

2. Appareil à greffage selon la revendication 1, **caractérisé en ce que** lesdits premier (14) et second (15) groupes et ledit groupe de greffage (16) sont gérés et coordonnés entre eux par une unité de commande et de contrôle (40).

3. Appareil à greffage selon la revendication 1 ou 2, **caractérisé en ce que** ledit premier groupe (14) comprend :
- des moyens de séparation et de transport (17, 18) capables de séparer lesdits greffons (11) les uns des autres et de les disposer l'un après l'autre ;
- des moyens de stockage et de division (19) desdits greffons (11) en fonction de la dimension de leur section (d₁, d₂) ; et
- lesdits premiers moyens de manipulation (20, 122).

4. Appareil à greffage selon la revendication 3, **caractérisé en ce que** lesdits moyens de séparation et de transport comprennent au moins un transporteur vibrant (17) et une bande transporteuse (18), ledit transporteur vibrant (17) possédant un réceptacle (21) capable de recevoir lesdits greffons (11) en vrac, et une gouttière (22) le long de laquelle lesdits greffons (11) peuvent être disposés l'un après l'autre, l'une des extrémités de ladite bande transporteuse (18) formant une extension de ladite gouttière (22) et son extrémité opposée étant conçue pour coopérer avec lesdits moyens de stockage et de division (19).

5. Appareil à greffage selon la revendication 3 ou 4, **caractérisé en ce que** lesdits moyens de mesure et de sélection (23) comprennent au moins :
- un détecteur optique (24, 28) destiné à détecter au moins l'orientation dudit bourgeon (11a) et ladite dimension de section (d₁, d₂) ;
- un dispositif d'expulsion (25, 29, 123) destiné à déverser desdits moyens de séparation et de transport (17, 18) les greffons (11) dont le bourgeon (11a) est mal orienté et/ou ladite dimension de section (d₁, d₂) ne convient pas ; et
- un dispositif transporteur (30) destiné à dévier sélectivement le parcours de chacun desdits greffons (11) et à les diriger vers une partie spécifique desdits moyens de stockage et de division (19) en fonction d'au moins ladite dimension de section (d₁, d₂).

6. Appareil à greffage selon la revendication 5, **caractérisé en ce que** lesdits moyens de mesure et de sélection (23) comprennent un dispositif de rotation (124) capable d'inverser sélectivement l'orientation dudit bourgeon (11a) en faisant pivoter le greffon (11) de 180°, pendant son transit sur lesdits moyens de séparation et de transport (17, 18).

7. Appareil à greffage selon la revendication 3, **caractérisé en ce que** lesdits moyens de stockage et de division (19) comprennent une pluralité de secteurs réceptacles (39a, 39b, 39c, 39d) dont chacun est associé à une plage respective de dimension de section (d₁, d₂).

8. Appareil à greffage selon la revendication 7, **caractérisé en ce que** chacun desdits secteurs réceptacles (39a, 39b, 39c, 39d) est divisé en une pluralité de logements (43a, 43b, 43c, 43d, 43e) individuellement capables de recevoir un unique greffon (11) en provenance desdits moyens de séparation et de transport (17, 18) ou d'un autre logement (43a, 43b, 43c, 43d, 43e) adjacent.

9. Appareil à greffage selon l'une quelconque des revendications 3 à 8 incluse, **caractérisé en ce que** lesdits premiers moyens de manipulation (20, 122) comprennent au moins une pince (48, 135, 138, 139) pouvant se déplacer à partir d'une première position pour prélever un greffon individuel (11) à partir desdits moyens de stockage et de division (19), dans ladite première position spécifique de la zone prévue pour le greffage.

10. Appareil à greffage selon l'une quelconque des revendications précédentes, **caractérisé en ce que** ledit second groupe (15) comprend :
- des moyens de séparation et de transport (57) capables de séparer lesdits rameaux de vigne (12) amenés en paquets et/ou en vrac et de les disposer l'un après l'autre ;
- des moyens d'orientation et d'alignement (86, 152) de chacun des rameaux de vigne (12) ;
- des moyens de mesure capables de détecter au moins une dimension de section (d₁, d₂) dudit rameau de vigne individuel (12) ; et
- lesdits seconds moyens de manipulation (54, 142).

11. Appareil à greffage selon la revendication 10, **caractérisé en ce que** lesdits moyens de séparation (57) comprennent en série :
- un premier élément de transport (56) des rameaux de vigne (12) en vrac ;
- un dispositif de peigne fixe (57) définissant une pluralité de cavités (57a, 57b, 57c) destinées à recevoir lesdits rameaux de vigne (12) ;
- un dispositif de chargement (58, 143) capable de prélever une quantité définie de rameaux de vigne (12) à partir dudit premier élément de transport (56) et à les décharger dans quelques unes au moins des cavités (57a, 57b, 57c) dudit dispositif de peigne fixe (57) ;
- un dispositif de peigne mobile (59) capable à la fois de se déplacer en translation longitudinale par rapport audit dispositif de peigne fixe (57), et d'être soulevé et abaissé par rapport à celui-ci, ledit dispositif de peigne mobile (59) étant muni de dents (59a) pouvant venir croiser géométriquement lesdites cavités (57a, 57b, 57c) afin de désenchevêtrer lesdits rameaux de vigne (12), de les séparer progressivement et de les faire avancer au cours de ses mouvement de soulèvement/abaissement et de translation ;
- un second élément de transport (60) sur lequel ledit dispositif de peigne mobile (59) peut déposer lesdits rameaux de vigne séparés (12) ;
- une unité de transfert (61) capable de recevoir lesdits rameaux de vigne (12) dudit second élément de transport (60) et à prendre chacun d'eux individuellement en coopération avec lesdits moyens d'orientation et d'alignement (86, 152).

12. Appareil à greffage selon la revendication 10 ou 11, **caractérisé en ce que** lesdits moyens d'orientation et d'alignement (86, 152) comprennent des éléments préhenseurs (88, 156) capables d'adopter sélectivement un position fermée dans laquelle, à l'aide d'inserts oscillants respectifs (96), ils peuvent saisir un rameau de vigne individuel (12), le faire pivoter sur lui-même de manière à placer un axe (d₂) de la section dudit rameau sur un plan prédéterminé, et une position ouverte dans laquelle ils peuvent libérer ledit rameau de vigne (12) afin de le remettre auxdits seconds moyens de manipulation (54, 142).

13. Appareil à greffage selon la revendication 12, **caractérisé en ce que** lesdits moyens d'orientation et d'alignement (152) comprennent une pluralité desdits éléments préhenseurs (156) dont chacun est capable se déplacer progressivement d'une première position (P1), où il prélève un rameau de vigne individuel (12) provenant de ladite unité de transfert (61), jusqu'à une deuxième position d'attente (P2) et une troisième position (P3) où il remet ledit rameau de vigne (12) auxdits seconds moyens de manipulation (142).

14. Appareil à greffage selon la revendication 13, **caractérisé en ce** chacun desdits éléments préhenseurs (156) peut faire pivoter l'orientation dudit rameau de vigne de 90°, de sorte que ledit axe (d₂) se trouve sur un plan perpendiculaire audit plan prédéterminé.

15. Appareil à greffage selon l'une quelconque des revendications 10 à 14 incluse, **caractérisé en ce que** lesdits moyens de mesure comprennent un premier dispositif de mesure (89) capable de détecter la position d'au moins un premier noeud (12a) présent sur ledit rameau de vigne (12), et un second dispositif de mesure (120) capable de détecter ladite dimension de section (d₁, d₂) dudit rameau de vigne individuel (12).

16. Appareil à greffage selon l'une quelconque des revendications 10 à 15 incluse, **caractérisé en ce que** lesdits seconds moyens de manipulation (54, 142) comprennent au moins une paire de pinces (98, 99, 160) capable de se déplacer alternativement au moins d'une première position ou station (S1) proche desdits moyens d'orientation et d'alignement (86, 152), afin de prélever ledit rameau de vigne (12), jusqu'à une deuxième position ou station (S2) proche dudit groupe de greffage (16) afin de placer ledit rameau de vigne (12) dans ladite deuxième position spécifique de la zone prévue pour le greffage.

17. Appareil à greffage selon la revendication 16, **caractérisé en ce que** lesdits seconds moyens de manipulation (142) comprennent quatre pinces (160) pouvant chacune se déplacer progressivement vers ladite première position ou station (S1), vers ladite deuxième position ou station (S2), vers une troisième position ou station (S3), où elle soumet la bouture de vigne (13) obtenue dudit rameau de vigne (12) à un traitement à la paraffine, et vers une quatrième position ou station (S4) où elle déverse ladite bouture de vigne (13).

18. Appareil à greffage selon les revendications 13 et 16 ou 17, **caractérisé en ce que** lesdits éléments préhenseurs (156) sont associés à des premiers moyens de rotation (158) capables de les amener progressivement auxdites positions (P1, P2, P3), **en ce que** lesdites pinces (160) sont associées à des seconds moyens de rotation (159) capables de les amener progressivement auxdites positions ou stations (S1, S2, S3, S4) et **en ce que** lesdits premiers moyens de rotation (158) et lesdits seconds moyens de rotation (159) se déplacent en synchronisation réciproque.

19. Appareil à greffage selon l'une quelconque des revendications précédentes, **caractérisé en ce que** ledit groupe de greffage (16) comprend deux unités de greffage (105, 106) pouvant être placées alternativement dans une première position de travail (I) pour effectuer une première étape du greffage comprenant au moins la découpe dudit greffon (11), en coopération avec ledit premier groupe (14), et dans une seconde position de travail (II) afin d'achever le greffage en coupant ledit rameau de vigne (12) et en l'accouplant audit greffon (11) en coopération avec ledit second groupe (15).

20. Appareil à greffage selon la revendication 19, **caractérisé en ce que** lesdites unités de greffage (105, 106) sont montés sur des tables tournantes (107, 166) capables d'effectuer une rotation de ± 180° afin de les amener alternativement auxdites positions de travail (I, II).

21. Appareil à greffage selon la revendication 19 ou 20, **caractérisé en ce qu'**il comprend au moins deux matrices (109) placées respectivement dans ladite première position de travail (I) et dans ladite seconde position de travail (II), capables de coopérer alternativement avec ladite première unité de greffage (105) et avec ladite seconde unité de greffage (106).

22. Appareil à greffage selon la revendication 21, **caractérisé en ce que** chacune desdites unités de greffage (105, 106) comprend :
- un couteau (110) capable de se déplacer sélectivement d'une première position, où il se trouve d'un côté du plan (A) sur lequel s'effectue le greffage, à une seconde position où il se trouve du côté opposé dudit plan (A) afin de couper ledit greffon (1) et/ou ledit rameau de vigne (12) en coopération avec l'une desdites matrices (109) ; et
- un élément pousseur (111) coopérant avec ledit couteau (110) et avec ladite matrice (109), capable de se déplacer d'une position en retrait dudit couteau (110) jusqu'à une position avancée où il se trouve en coopération avec ledit plan (A) afin d'aligner ledit greffon (11) sur ledit rameau de vigne (12).

23. Appareil à greffage selon la revendication 22, **caractérisé en ce que** ladite matrice (109) est opposée audit couteau (110) et est capable de se déplacer d'une position distante dudit plan (A) vers une position proche dudit couteau (110) et coopérant avec lui, à proximité du plan (A) afin de couper ledit greffon (11) et/ou ledit rameau de vigne (12).

24. Appareil à greffage selon la revendication 22, **caractérisé en ce que** ledit couteau (110), après avoir coupé ledit greffon (1) à ladite première étape de greffage, est capable de tenir la partie dudit greffon (11) à accoupler audit rameau de vigne (12) afin de l'amener de ladite première position de travail (I) à ladite seconde position de travail (II).

25. Appareil à greffage selon la revendication 24, **caractérisé en ce que** dans ladite seconde position de travail (II), ledit couteau (110) est capable de couper ledit rameau de vigne (12) en tenant ladite partie du greffon (11), et **en ce que** ledit élément pousseur (111) est capable de pousser ladite partie du greffon (11) dans l'alignement dudit rameau de vigne (12) coupé sur ledit plan (A) afin d'achever le greffage.

26. Méthode de greffage pour les boutures de vignes ou autres variétés de légumes (13) obtenues en accouplant par greffage un premier bois, ou greffon (11), portant au moins un bourgeon (11a) à l'une de ses extrémités, et un second bois ou rameau de vigne (12), **caractérisée en ce qu'**elle comprend les étapes suivantes :
- séparer automatiquement au moins un greffon (11) à la fois, de dimension de section définie (d₁, d₂), d'une pluralité de greffons (11) placés en vrac et en position de prélèvement ;
- séparer automatiquement au moins un rameau de vigne (12) à la fois, de dimension de section définie (d₁, d₂), d'une pluralité de rameaux de vigne (12) placés en vrac et en position de prélèvement;
- piloter des moyens de prélèvement (20, 122) des greffons (11) en vue de prélever un greffon (11) dont la dimension de section (d₁, d₂) est corrélée à celle dudit rameau de vigne (12), et de le placer dans une zone prévue pour le greffage au niveau d'un groupe de greffage (16) ;
- piloter des moyens de prélèvement (54, 142) des rameaux de vigne (12) en vue de prélever ledit rameau de vigne (12) et de le placer dans la zone prévue pour le greffage ;
- piloter ledit groupe de greffage (16) pour qu'il effectue automatiquement le greffage.

27. Méthode selon la revendication 26, **caractérisée en ce que** ledit groupe de greffage (16) effectue le greffage en deux parties : une première partie où il coupe ledit greffon (11) dans une première position spécifique de la zone prévue pour le greffage, et une seconde partie où il coupe ledit rameau de vigne (12) et l'accouple audit greffon (11) dans une seconde position spécifique de la zone prévue pour le greffage.

28. Méthode selon les revendications 26 et 27, **caractérisée en ce que** ledit groupe de greffage (16) effectue simultanément ladite seconde partie du greffage d'un premier greffon (11) et d'un rameau de vigne apparié (12), et ladite première partie du greffage sur un second greffon (11).

29. Méthode selon l'une quelconque des revendications 26 à 28 incluse, **caractérisée en ce qu'**elle comprend une autre étape où la bouture de vigne (13) obtenue par ledit greffage est soumise à un traitement à la paraffine.
